# EUROPÄISCHE PATENTSCHRIFT

(11) **EP 2 084 340 B1**
(45) Veröffentlichungstag und Bekanntmachung des Hinweises auf die Patenterteilung: **20.04.2011**
(21) Anmeldenummer: 07815164.4
(22) Anmeldetag: 02.11.2007
(51) Int. Cl.: E04B 7/10, E04D 3/24, E04D 3/363, E04F 13/08

(54) **ABDECKUNG, VERKLEIDUNG ODER DERGLEICHEN VON BAUWERKEN BZW. BAUWERKSTEILEN**
COVERING, CLADDING OR THE LIKE FOR BUILDINGS OR PARTS OF BUILDINGS
REVÊTEMENT, HABILLAGE OU ANALOGUE POUR BÂTIMENTS OU PARTIES DE BÂTIMENTS

(30) Priorität: 03.11.2006 AT 18432006
(43) Veröffentlichungstag der Anmeldung: 05.08.2009
(73) Patentinhaber: Prefa Aluminiumprodukte Gesellschaft m.b.H., 3182 Markt/Lilienfeld (AT)
(72) Erfinder: OEHLER, Walter, A-1140 Wien (AT)
(74) Vertreter: Itze, Peter
(86) Internationale Anmeldenummer: PCT/AT2007/000497
(87) Internationale Veröffentlichungsnummer: WO 2008/052236

(56) Entgegenhaltungen:
- EP-A- 0 049 871
- EP-A- 0 119 398
- DE-A1- 1 683 038
- DE-C1- 4 306 250
- US-A- 4 004 392
- US-A- 5 782 044

## Beschreibung

Die Erfindung betrifft eine Abdeckung, Verkleidung oder dergleichen von Bauwerken bzw. Bauwerksteilen, bestehend aus flächigen Bauelementen, wobei die Bauelemente über eine Nut-Feder-Verbindung unter Vermeidung offener Stoßfugen verbindbar sind.

Nut-Feder-Verbindungen werden häufig verwendet, um einzelne Bauteile, wie etwa Paneele, Bodenelemente oder Bretter, zu großen Flächen zusammenzufügen. Ein Nachteil dieser Nut-Feder-Verbindungen des Standes der Technik ist jedoch, dass mit diesen Systemen nur ebene Flächen gebildet werden können. US 5782044 zeigt solch eine abdeckung gemäß dem Oberbegriff des Ansprunchs 1.

Der vorliegenden Erfindung liegt die Aufgabe zugrunde, eine Abdeckung, Verkleidung oder dergleichen zu schaffen, mit der dreidimensional gekrümmte Fassaden- und Dachflächen in einem wirtschaftlich vertretbaren Rahmen ausgeführt werden können.

Die für das Herstellen solcher Flächen vorgesehenen Verkleidungselemente werden nach einem von einem der Miterfinder der vorliegenden Erfindung entwickelten einzigartigen Verfahren hergestellt, bei welchem langgestreckte Profilelemente parallel zu ihrer äußeren Deckfläche quer zur Längsachse gebogen werden, wobei im äußeren Kurvenbereich ein gezieltes Überdehnen des Materials erfolgt, so dass nach Freigabe aus der Biegelehre ein gezieltes Rückfedern in die gewünschte Krümmung erzielt wird. Das Biegen und Tordieren des Profilelements quer zur äußeren Deckfläche wird dann an Ort und Stelle bei der Montage vorgenommen, wonach dann das Element in der gewünschten Form und Lage an Tragorganen festgelegt wird. Alternativ dazu können, vor allem bei der Verwendung schmaler, flexibler Profile, die Verkleidungselemente erst bei der Montage parallel zu ihrer äußeren Deckfläche quer zur Längsachse elastisch angebogen werden.

Erfindungsgemäß wird diese Aufgabe dadurch durch eine Verkleidung, Abdeckung oder dergleichen nach dem Anspruch 1 gelöst, wobei jedes Bauelement im Bereich der Nut-Feder-Verbindung mit einem benachbarten Bauelement zusammenspannbar ist, und dass an jedem Bauelement im Verbindungsbereich zum benachbarten Bauelement von der der Außenfläche abgewandten Seite über das Verbindungselement hinausragend eine Halterippe oder dergleichen absteht, mittels derer die Bauelemente an einer Unterkonstruktion festlegbar sind. Die Erfindung ermöglicht eine rationelle Montage mittels werksseitig vorgefertigter Bauelemente, die während des Montagevorganges keiner weiteren Bearbeitungsschritte bedürfen. Dabei ist eine Anpassung auch an komplexe Fassaden- und/oder Dachformen sowie an mehrachsig gekrümmte Flächen möglich.

In einer bevorzugten Ausführungsform weist jedes Bauelement der erfindungsgemäßen Abdeckung im Bereich der Nut-Feder-Verbindung an der der Außenfläche abgewandten Seite von dem Bauelement abstehend Längsrippen für das Ansetzen von Verbindungselementen, wie Spann- und/oder Klammerelementen, zum Zusammenspannen der Bauelemente auf. Solche auf Längsrippen angesetzte Spann- und/oder Klammerelemente sichern die Bauelemente gegeneinander und gewährleisten die Geschlossenheit der Stoßfuge.

In vorteilhafter Weise sind auf der Unterkonstruktion Führungselemente, zum Anbringen von Halteelementen für den Eingriff an den Halterippen der Bauelemente ausgebildet. Dies ermöglicht eine flexible und schnelle Montage der Bauelemente, wobei keine aufwendigen Schweißverbindungen notwendig sind.

In einer bevorzugten Ausführungsform ist das Halteelement entlang des Führungselements verschiebbar und/oder das Bauelement ist in dem Halteelement entlang der Halterippe verschiebbar. Das Bauelement ist dabei an der Halterippe mittels des Halteelements an dem Führungselement so angebracht, dass das Bauelement in Bezug auf das Führungselement in ein, zwei oder drei Richtungen schwenkbar ist. Diese Ausführungsform ermöglicht es den Bauelementen, Wärmeausdehnungen, wie sie etwa bei Sonneneinstrahlung auftreten können, auszugleichen und somit Spannungsspitzen zu vermeiden.

Die Unterkonstruktion, an der die Halteelemente angebracht sind, kann eine Rohrkonstruktion, eine Konstruktion aus Trägerprofilen aus Stahl, Aluminium, Holz oder Kompositbauteilen, oder eine Kombination daraus sein. Damit lässt sich eine einfache und günstige und zudem tragfähige Unterkonstruktion erzielen, die sich auch für Leichtbauweise eignet.

Die Unterkonstruktion weist in vorteilhafter Weise parallel zueinander verlaufende Trägerprofile, Balken, Rohre oder dergleichen auf, zwischen denen eine Regenrinne, beispielsweise aus einem Metallblech, aus einem Elastomer oder aus Gummi, angeordnet ist. Dabei können die Halteelemente Hakenelemente aufweisen, in welche die Regenrinne eingehängt ist. Solch eine Unterkonstruktion ermöglicht es, etwa bei großen Flächen, Dehnfugen zwischen zwei angrenzenden Bauelementen vorzusehen, wobei die Dichtheit der Dachkonstruktion gewährleistet bleibt. Weiters kann dadurch eine Ableitung von Regenwasser auch in der Mitte einer Dachfläche vorgesehen werden.

In vorteilhafter Weise weist die Feder in ihrem äußeren Bereich einen im Wesentlichen keilförmigen Querschnitt auf, wobei im eingesetzten Zustand die Mittelebene der Feder entweder Parallel zur Mittelebene der Nut verläuft, oder mit dieser einen spitzen Winkel einschließt. Bei der Montage des Bauelements ermöglicht es diese Ausführungsform, das neue Bauelement schräg von oben in ein bereits montiertes angrenzendes Bauelement einzufügen und es in die richtige Lage zu schwenken.

Die äußeren Oberflächen von zumindest zwei Bauelemen der erfindungsgemäßen Abdeckung grenzen im eingebauten Zustand entlang einer Stoßkante aneinander an und Schließen dort zueinander einen flachen Winkel ein, wobei sowohl die Dichtheit, als auch die Geschlossenheit der Stoßfuge, und der Zusammenhalt der Nut-Feder-Verbindung in ihrer Funktionalität erhalten bleiben. Gekrümmte Flächen können somit mit einer Reihe von Bauelementen, die jeweils unter einen flachen Winkel zueinander angeordnet sind, angenähert werden; dadurch ergibt sich ein optisches Erscheinungsbild, bei dem die Kanten nur bei genauer Betrachtung aus der Nähe erkennbar sind.

In einer vorteilhaften Ausführungsform weist die Nut-Feder Verbindung zumindest ein Dichtungselement auf. Durch ein integriertes Dichtungssystem kann somit eine regendichte Dachoberfläche erzielt werden, wodurch die Notwendigkeit einer zweiten wasserführenden Unterschicht entfallen kann.

Das Dichtungselement kann ein in die Nut eingelegter Dichtungskörper sein, wobei in der Nut eine oder mehrere Haltenasen angeordnet sein können, welche das Dichtungselement in der Nut zurückhalten. Der Dichtungskörper kann dabei schon vor der Montage im Werk eingebaut werden, oder er wird bei der Montage vor Ort eingefügt.

In vorteilhafter Weise kleidet das Dichtungselement die Innenseite der Nut vollständig aus, wobei das Dichtungselement an zumindest einer Seite der Nut über den Rand der Nut hinausreichen kann. Dabei kann die Feder eines angrenzenden Bauelements im Bereich des Federansatzes in einem abdichtenden Eingriff mit dem Dichtungselement sein. Eine solche Ausbildung des Dichtungselementes erleichtert dessen Einbau und ermöglicht einen dichtenden Eingriff an beiden Seiten der Feder.

Eine weitere mögliche Ausführungsform ist dadurch gekennzeichnet, dass das Dichtungselement im hinteren Bereich der Nut angeordnet ist, wobei die Feder im Bereich der Federvorderfläche in einem abdichtenden Eingriff mit dem Dichtungselement ist, welches in vorteilhafter Weise schlauchförmig ausgebildet ist. Dies stellt einen einfachen Dichtungskörper dar, wobei eine genaue Positionierung nicht erforderlich ist, da diese durch die eingesteckte Feder erfolgt.

Bei einer weiteren bevorzugten Ausgestaltung ist das Dichtungselement ein auf die Feder aufgebrachter Dichtungskörper. Dabei können in dem Bauelement auf einer oder auf beiden Seiten der Feder Aufnahmefugen ausgebildet sein, in welchen freie Enden des Dichtungskörpers eingelegt sind, wobei der Dichtungskörper in den Aufnahmefugen, etwa durch darin ausgebildete Haltenasen oder -wülste, zurückgehalten ist. Der Dichtungskörper kann dabei nicht nur ein fertig geformter Dichtungskörper sein, sondern es könnte auch die Feder mit dem Dichtungskörper beschichtet sein, etwa durch eine aufgeklebte Dichtungsfolie.

Bei einer bevorzugten Ausführungsform weist jedes Bauelement endseitig zumindest je einen Einsatzkörper mit vorzugsweise profilierten Stirnflächen auf, die in den Bereichen der seitlichen Stirnfläche an der von der Außenfläche abgewandten Seite, beispielsweise durch eine Klebeverbindung, eine Schweißverbindung, eine Nietverbindung, eine formschlüssige Verbindung, eine Schraubverbindung, etc., so befestigt sind, dass sie einen Abschluss des Bauelementes gegenüber einem Einsatzkörper eines angrenzenden Bauelements bilden. Die Einsatzkörper können an beiden Endseiten baugleich sein, oder die Einsatzkörper an beiden Endseiten sind unterschiedlich ausgebildet, wobei je zwei Einsatzkörper aneinandergrenzender Bauelemente eine formschlüssige Verbindung, vorzugsweise eine Nut-Feder-Verbindung, ausbilden können. Zumindest einer der Einsatzkörper kann wenigstens ein Dichtungselement aufweisen. Dadurch können einheitlich ausgebildete Bauelemente, entweder vor Ort oder bei der Montage, auf beliebige Länge zugeschnitten, und mit einem Endprofil versehen werden.

Die Dichtungselemente/das Dichtungselement sind/ist in vorteilhafter Weise auf dem Einsatzkörper eines Bauelements, entweder über Dichtungsdistanzstücke oder über direkten Kontakt, mit den Dichtungselementen der angrenzenden Nut-Feder-Verbindungen der Längsseite des selben Bauelements, bzw. mit den Dichtungselementen der angrenzenden Nut-Feder-Verbindungen der Längsseite des angrenzenden Bauelements, in einem formschlüssigen Eingriff. Dadurch kann eine durchgängige Abdichtung an allen Stoßfugen rund um das Bauelement erzielt werden.

In einer weiteren bevorzugten Ausführungsform sind die Einsatzkörper angrenzender Bauelemente aneinander mittels einer Schraubverbindung, einer Klebeverbindung, einer Nietverbindung, einer Steckverbindung oder mittels Klammer- oder Spannelementen befestigt. Die Bauelemente können dadurch an vielfältige Montage- und Einsatzbedingungen angepasst und für verschiedene Festigkeitsanforderungen ausgelegt werden.

Bei einer weiteren Ausgestaltung können angrenzende Bauelemente an deren Stirnseiten unter Bildung einer Dehnfuge voneinander beabstandet sein, bzw. können sie mittels eines, vorzugsweise elastischen Distanzstückes, etwa aus PVC, miteinander verbunden sein. In vorteilhafter Weise kann das Distanzstück formschlüssig auf das Bauelement aufgesteckt sein. Das Distanzstück kann auch einen oder mehrere Durchlässe, etwa für abfließendes Regenwasser, aufweisen. Bei geringeren Anforderungen an die Stabilität der Verbindung an den seitlichen Stirnflächen, können aufgesteckte, vorzugsweise elastische Distanzstücke, etwa aus PVC, eine kostengünstige Alternative zu fix montierten Einsatzkörpern, darstellen. Diese Stücke dienen als sogenannte Dilatationsstücke, das sind Elemente, die zum Ausgleich von z.B. durch Temperaturänderungen bedingte Dehnungen bzw. Schrumpfungen eingesetzt werden.

In einer Ausführungsform weisen die Bauelemente je zwei Längsrippen für das Ansetzen von Spann- und/oder Klammerelementen für eine gegenseitige Fixierung entlang der Nut/Feder-Verbindung auf, wobei die eine Längsrippe parallel zur Feder und unterhalb derselben angeordnet ist und die zweite Längsrippe parallel zur Nut und zwischen der Nut und der Halterippe für die Befestigung des Bauelementes an der Unterkonstruktion angeordnet ist, sodass jede Längsrippe unter der Nut an eine Längsrippe unter der Feder des angrenzenden Bauelements angrenzend angeordnet ist. Dabei können die beiden entlang der Nut/Feder-Verbindung verlaufenden Längsrippen zweier angrenzender Bauelemente voneinander abgewandte Randwülste zur Befestigung der Spann- und/oder Klammerelemente daran aufweisen. Bei der Montage ermöglicht diese Ausführungsform die Verwendung einheitlicher Spann- bzw. Klammerelemente, deren Verwendung auch dann möglich ist, wenn die Entfernung der Längsrippen zueinander variieren, etwa wenn zwei Bauelemente so miteinander verbunden sind, dass sie einen flachen Winkel zueinander einschließen.

In einer vorteilhaften Ausgestaltung weist das Spannelement zwei, etwa mittels einer Schraubspindel zusammenziehbare Spannbacken auf, welche mit den Randwülsten der Längsrippen im Eingriff sind. In einer anderen Ausführungsform ist das Klammerelement als elastisch verformbare, im Wesentlichen C-förmige Spange ausgebildet, welche mit den Randwülsten der Längsrippen im Eingriff ist. Solche Spann- bzw. Klammerelemente sind günstig herzustellen, sowie einfach und flexibel in ihrer Verwendung. Je nach Anforderungsprofil können die Längsrippen auf eine bestimmte Position zusammengespannt werden, oder sie werden zusammengeklammert, wodurch ein Spiel in der Entfernung der Längsrippen zueinander zugelassen wird.

In einer weiteren Ausführungsform weist das Spannelement einen elastischen Spannteil und eine starre Klammer auf, wobei der elastische Spannteil zwei elastisch miteinander verbundene und in Richtung einer gemeinsamen Mittelfläche hin zusammendrückbare Seitenteile aufweist, deren Außenseiten in Bezug auf die Mittelfläche keilförmig ausgebildet sind, und deren Innenseiten Randwülste für einen Eingriff in die Randwülste der Längsrippen aufweisen, wobei die Klammer einen im wesentlichen C-förmigen sich entlang der Mittelfläche verjüngenden Querschnitt aufweist, sodass die Klammer auf den Spannteil parallel zur Mittelfläche aufschiebbar ist, wobei der Spannteil bei aufgeschobener Klammer fest auf die Randwülste der Längsrippen gepresst ist. Durch diese Ausführungsform ist ein Spannen der Klammer von der Seite möglich, ohne dass dazu Spezialwerkzeuge erforderlich sind. Dabei wird eine schnelle und feste Verbindung ohne die Verwendung von Schrauben ermöglicht.

In einer Ausführungsform können zwei angrenzende und mittels Spann- oder Klammerelementen aneinander befestigte Bauelemente entlang der Nut/Feder-Verbindung gegeneinander verschiebbar sein. Aneinandergrenzende Bauteile können dadurch unterschiedliche Wärmedehnungen ausgleichen, die etwa aufgrund von unterschiedlicher Sonneneinstrahlung entstehen können.

In einer vorteilhaften Ausgestaltung sind die Einsatzkörper mittels einer oder mehrerer Hakenverbindungen miteinander verbunden, welche auf einer Seite Sperrhaken zum Einsetzen in gegenüberliegende Hakenöffnungen aufweist, wobei ein oder mehrere Sperrhaken mittels eines Riegelverschlusses entlang der seitlichen Stirnfläche verschiebbar sein können. Hakenverbindungen sind einfach in ihrer Anwendung und sichern die Stoßfuge an der Stirnfläche zuverlässig ab. Bewegliche Sperrhaken ermöglichen das gerade Einsetzen der Haken in die Hakenöffnung und ein Sperren der Verbindung, nachdem das Bauelement in seiner endgültigen Einbaulage ist.

Eine weitere mögliche Ausführungsform ist dadurch gekennzeichnet, dass die Nut-Feder-Verbindung an der Vorderkante der Feder Federhaken aufweist, welche in Schlitze, die im Nutenboden vorgesehen sind, eingreifen, um die Bauelemente zusammenzuspannen. Dadurch lässt sich die Geschlossenheit der Stoßfugen formschlüssig, d.h. ohne zusätzliche Bauteile, entlang der gesamten Nut-Feder-Verbindung sicherstellen. Eine ähnliche Wirkung kann dadurch erzielt werden, dass die Nut-Feder-Verbindung an der Feder Hakenausnehmungen aufweist, welche in Stifte, die von unten in die Nutkammer eingebracht sind, eingreifen, um die Bauelemente zusammenzuspannen.

In einer weiteren alternativen Ausbildung weist die Nut-Feder-Verbindung eine Schnappverbindung auf, dabei kann die obere Wand der Nutkammer im Bereich der Schnappverbindung elastisch ausgebildet sein oder die Schnappverbindung weist elastische Teilausstanzungen in der Feder auf. Diese Ausführungsform ermöglicht eine besonders schnelle Montage, bei der die Bauelemente nur noch gerade eingesteckt werden müssen, und unmittelbar formschlüssig zusammengespannt sind.

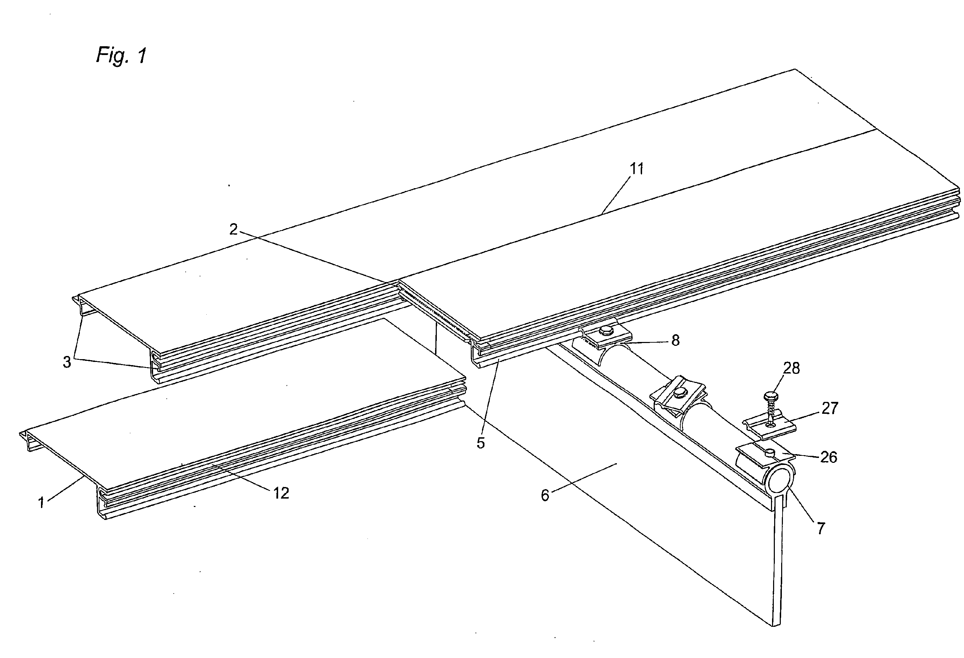

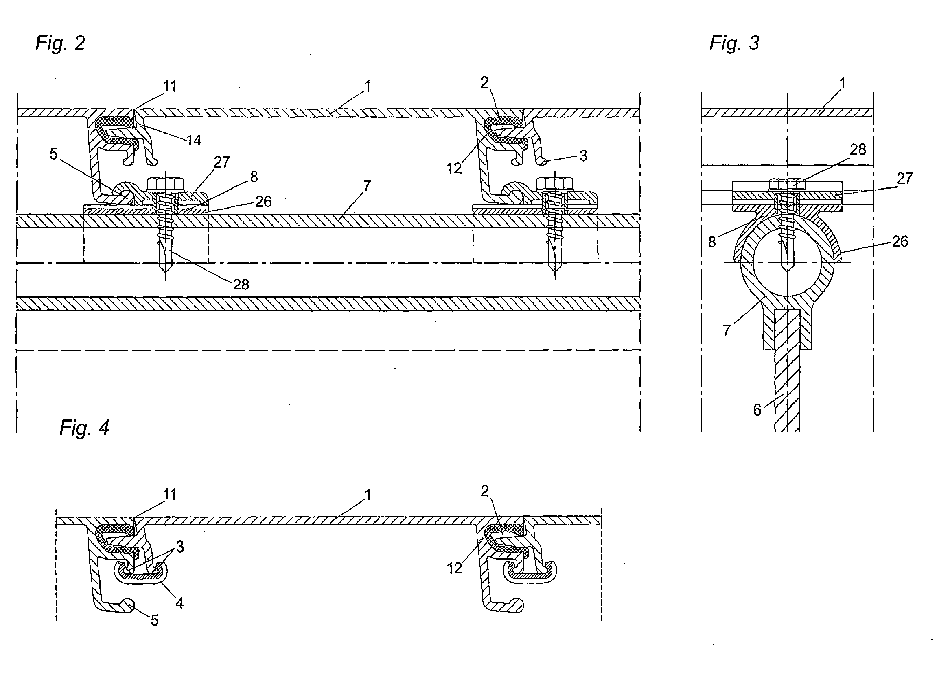

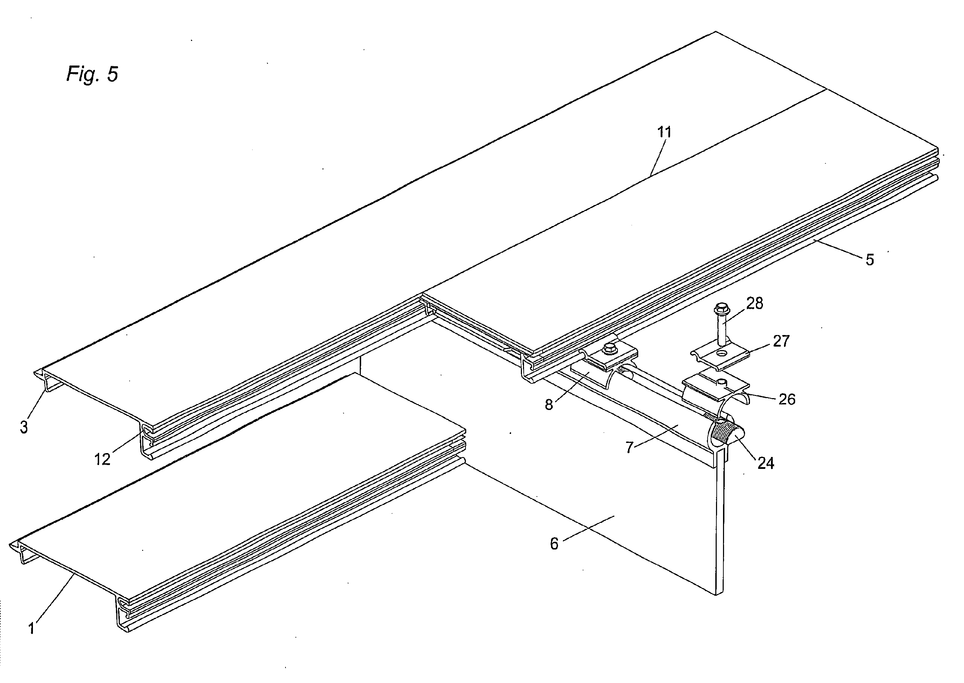

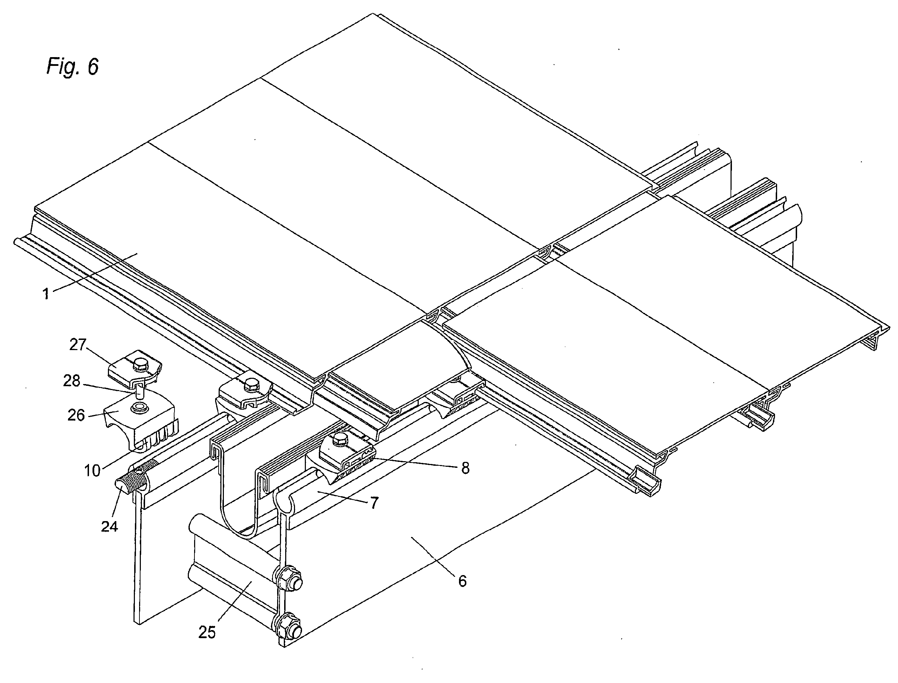

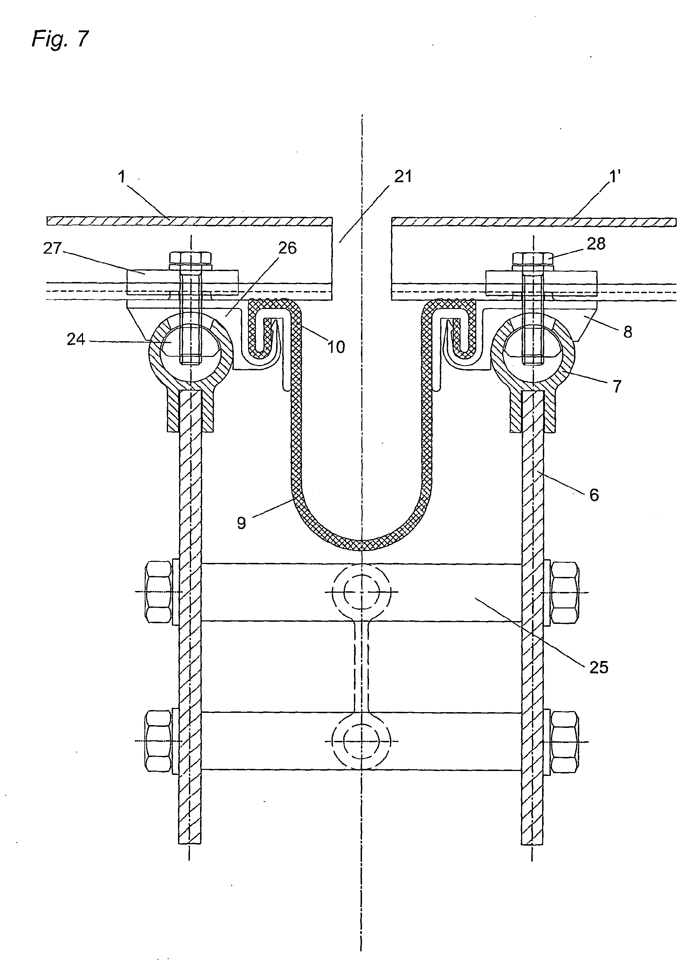

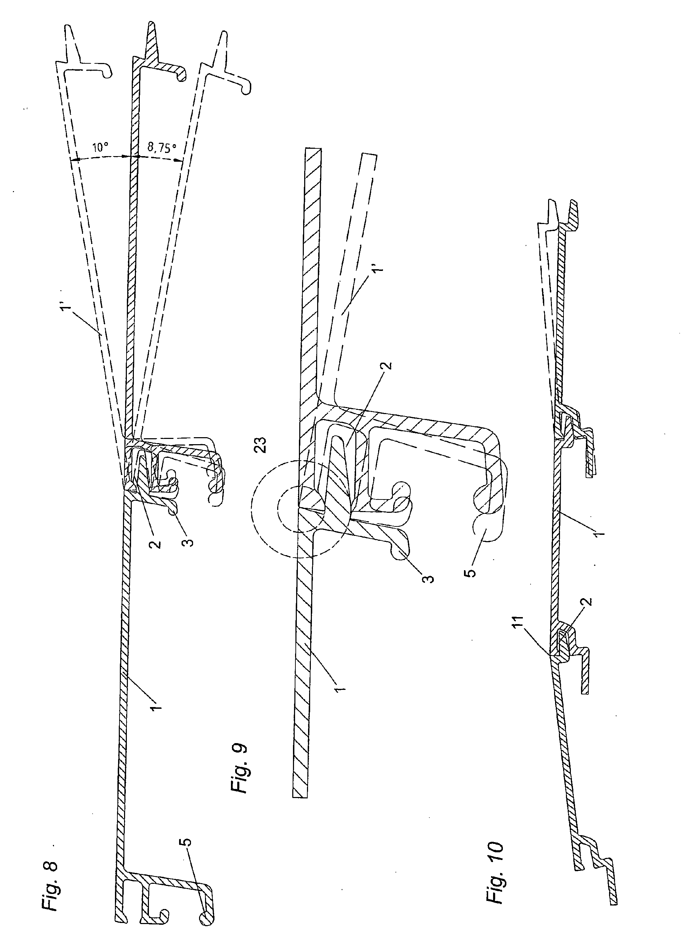

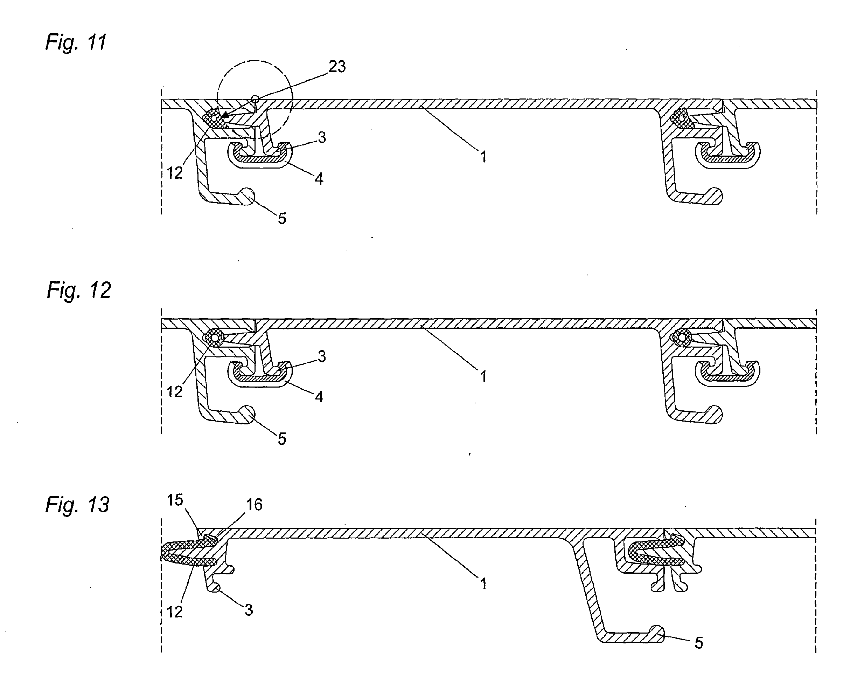

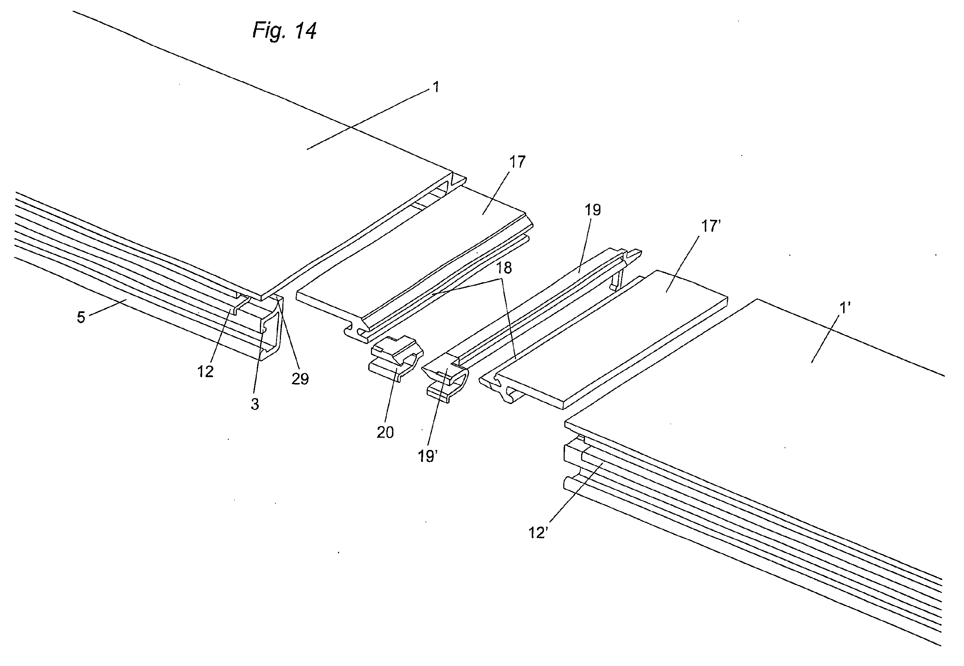

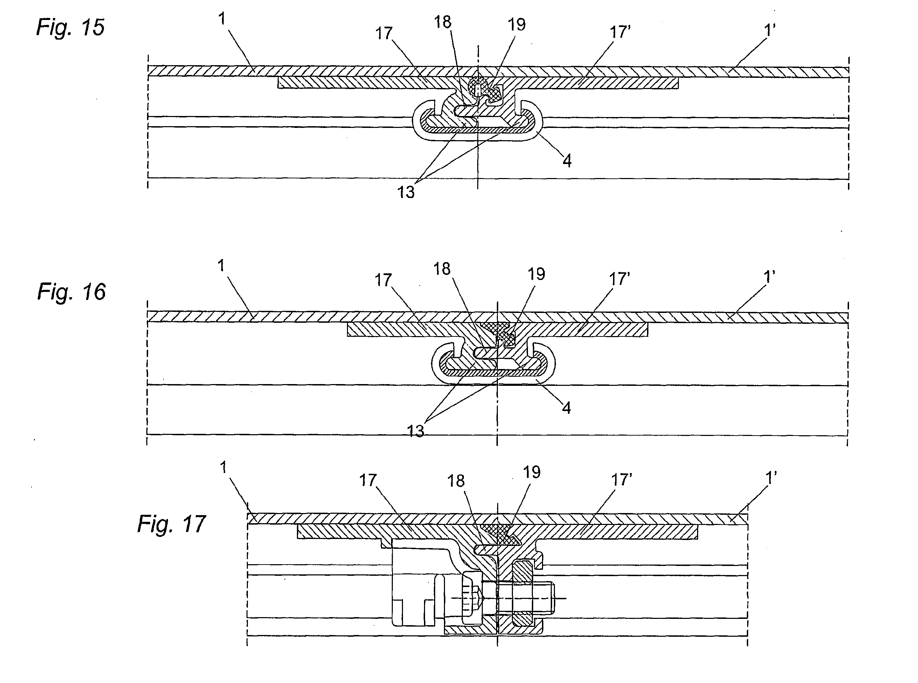

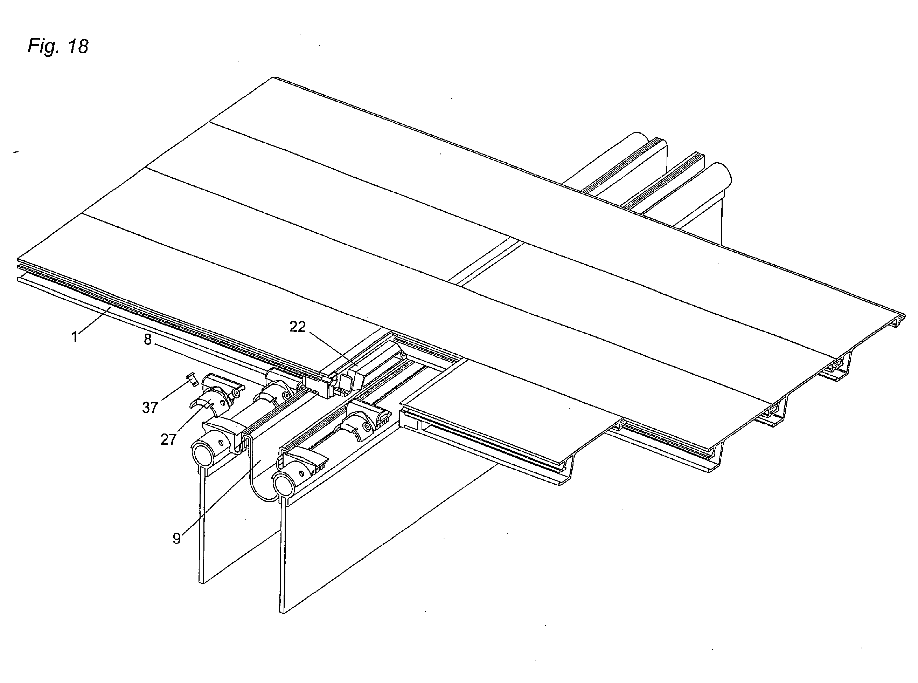

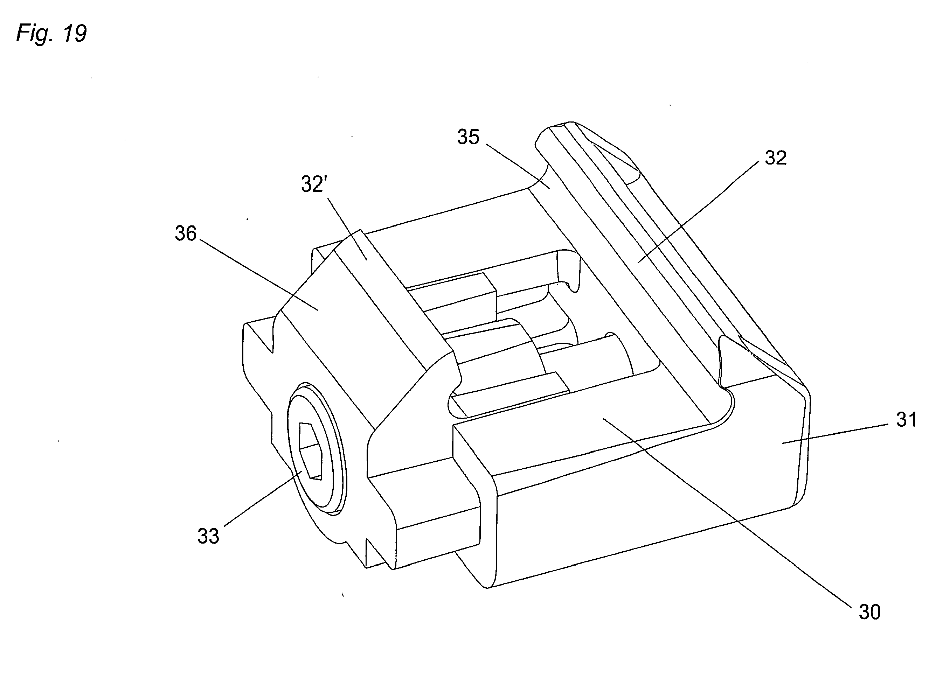

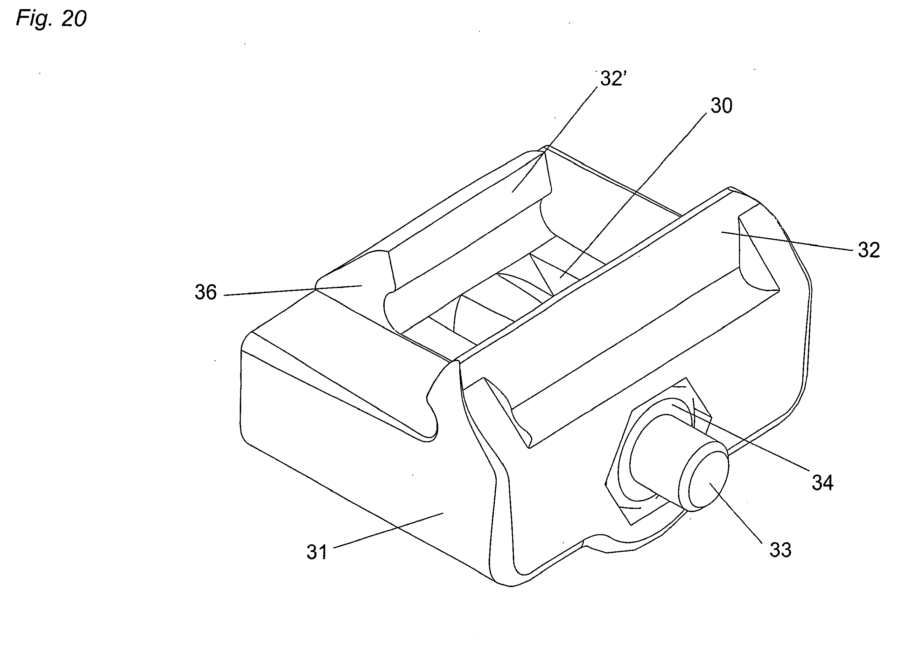

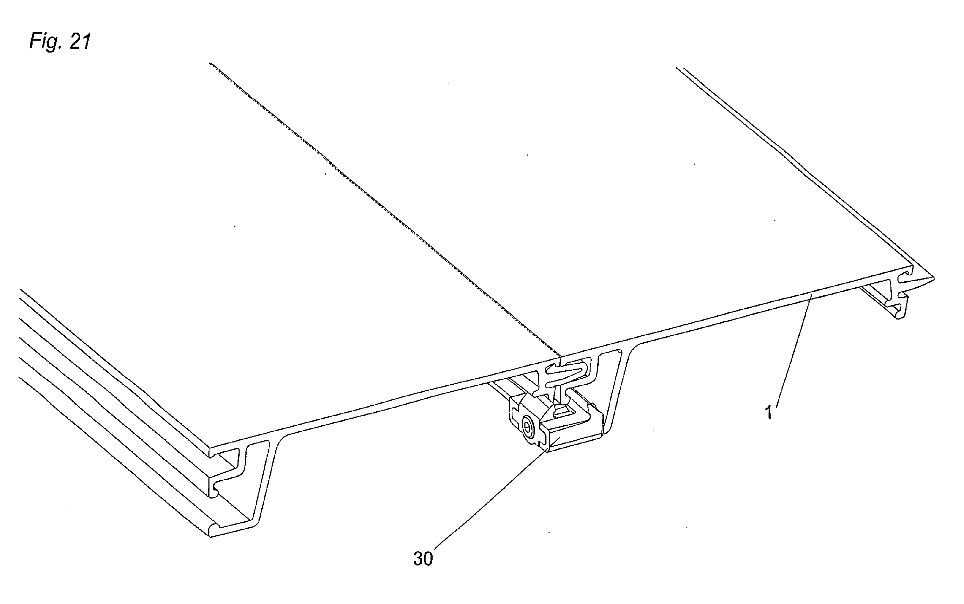

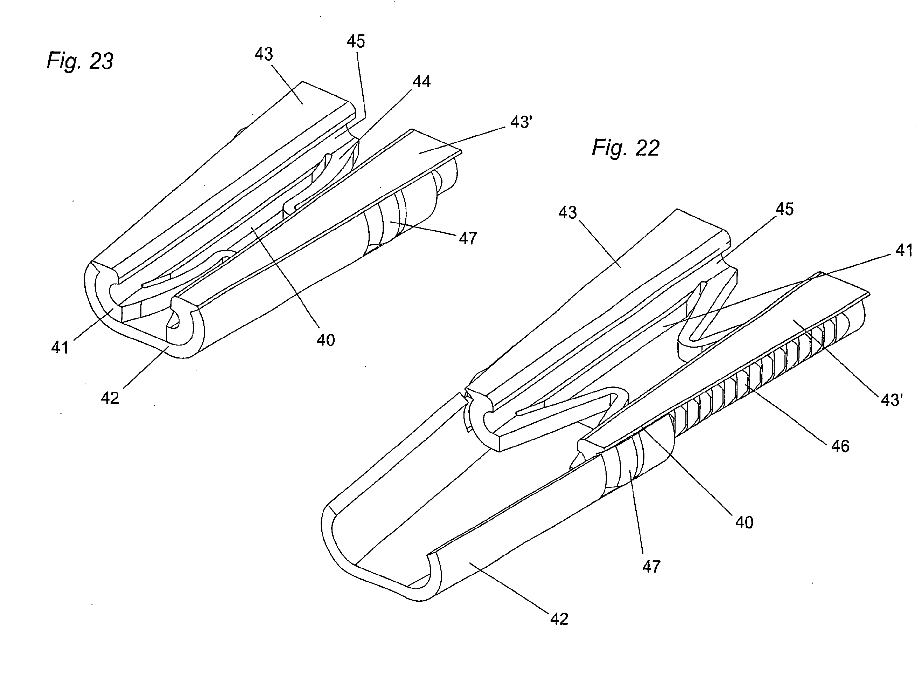

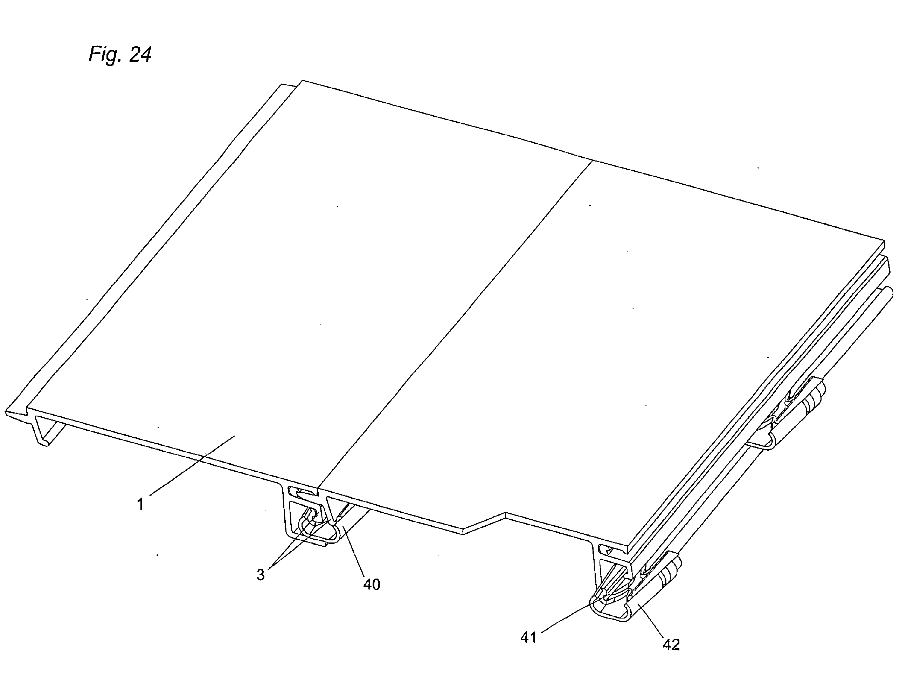

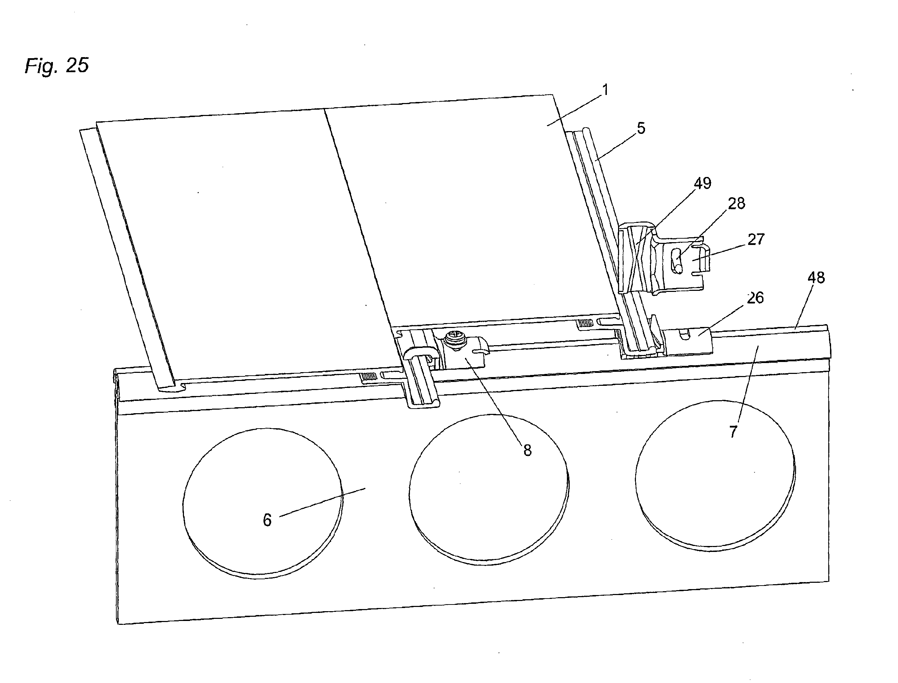

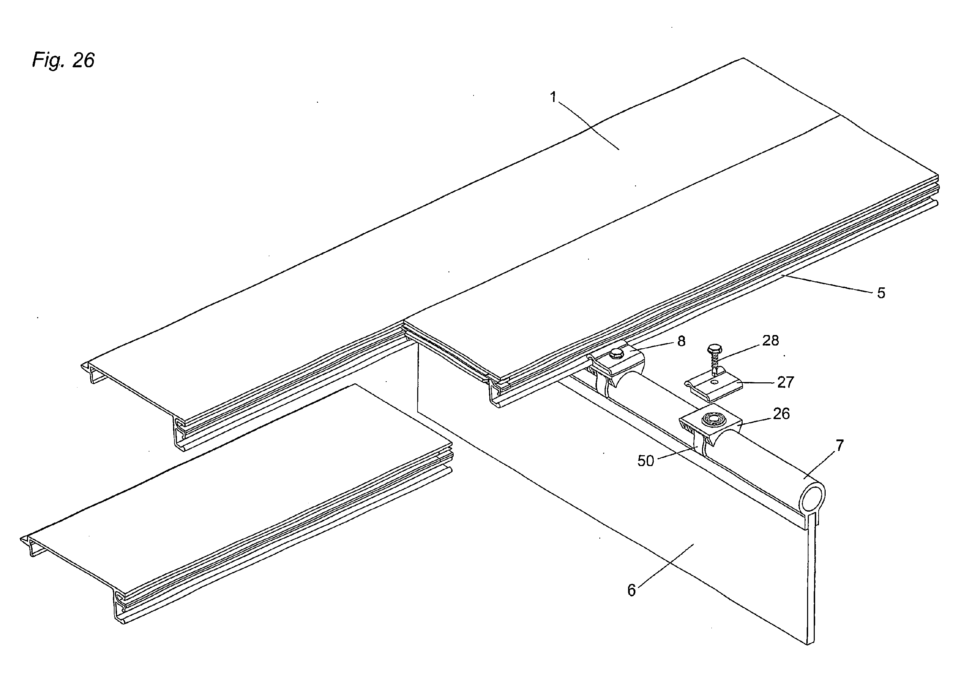

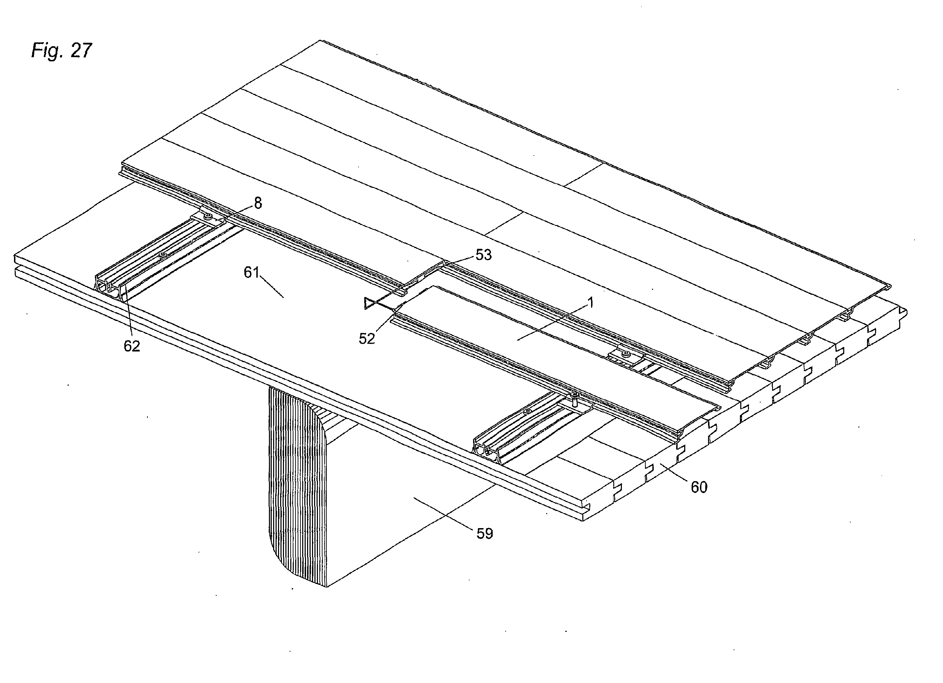

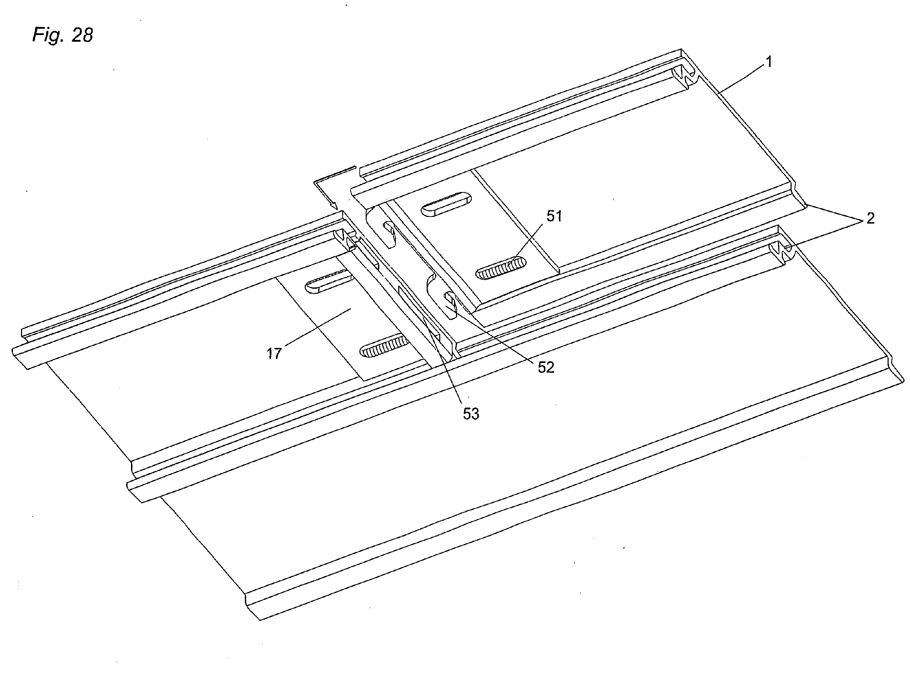

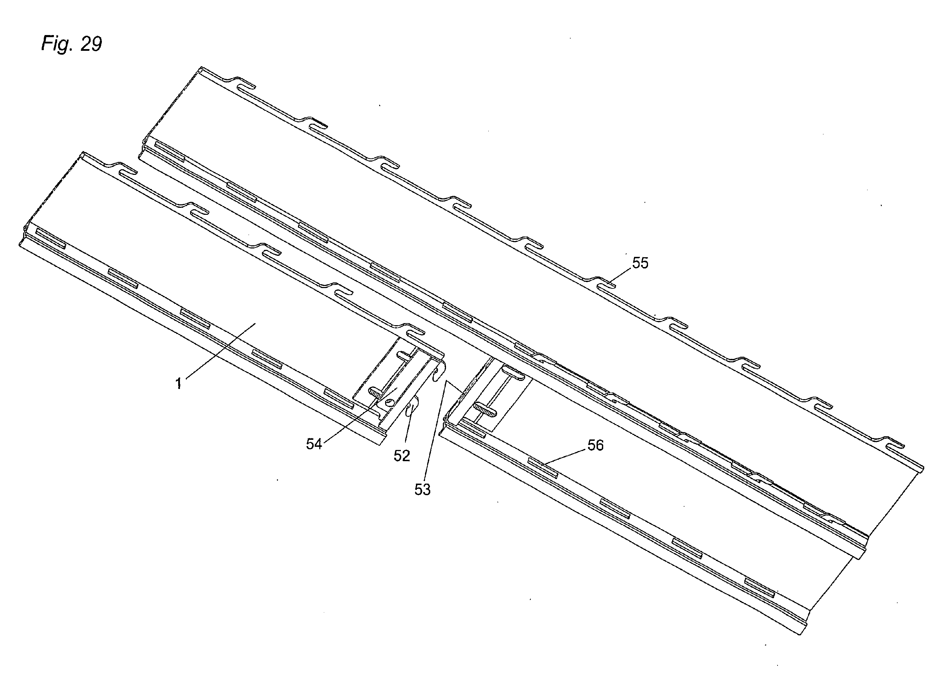

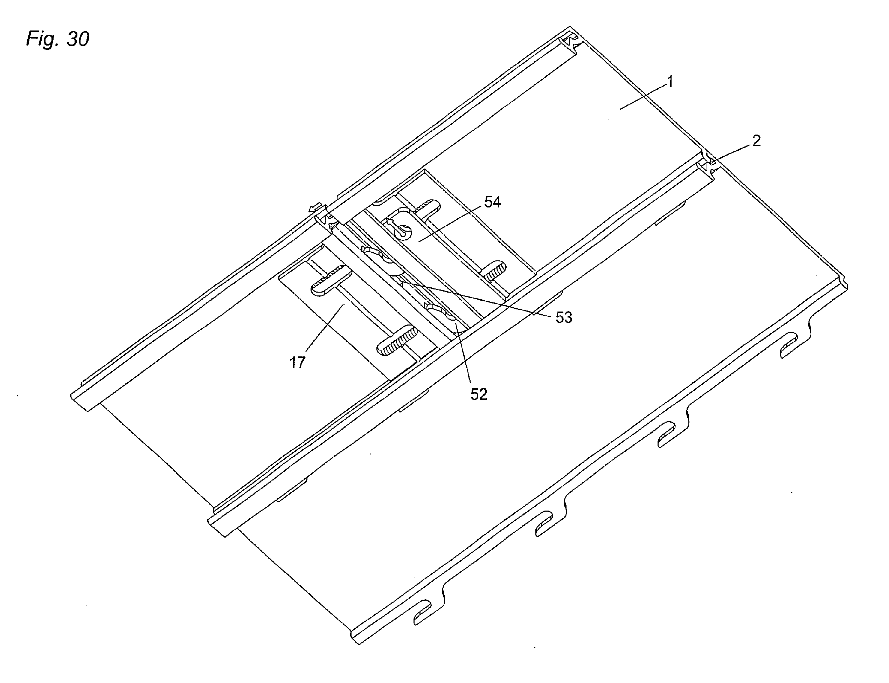

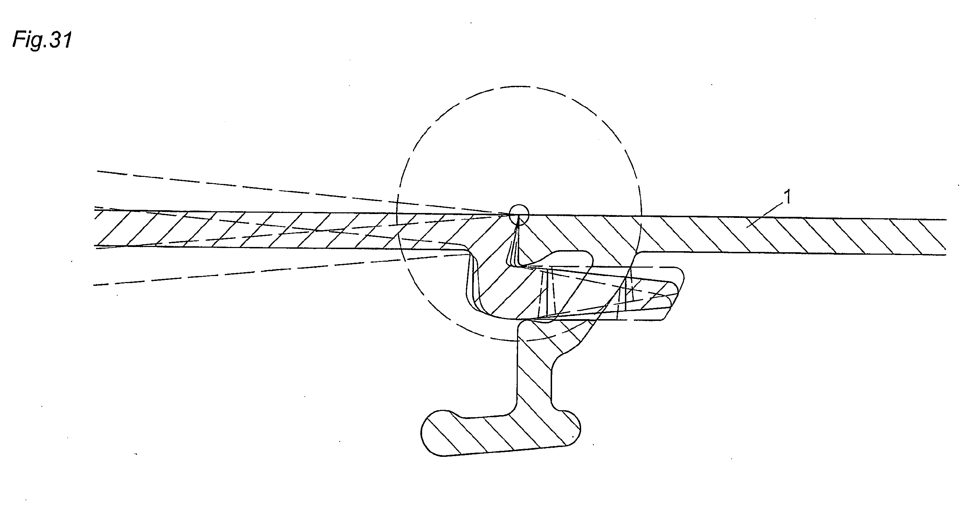

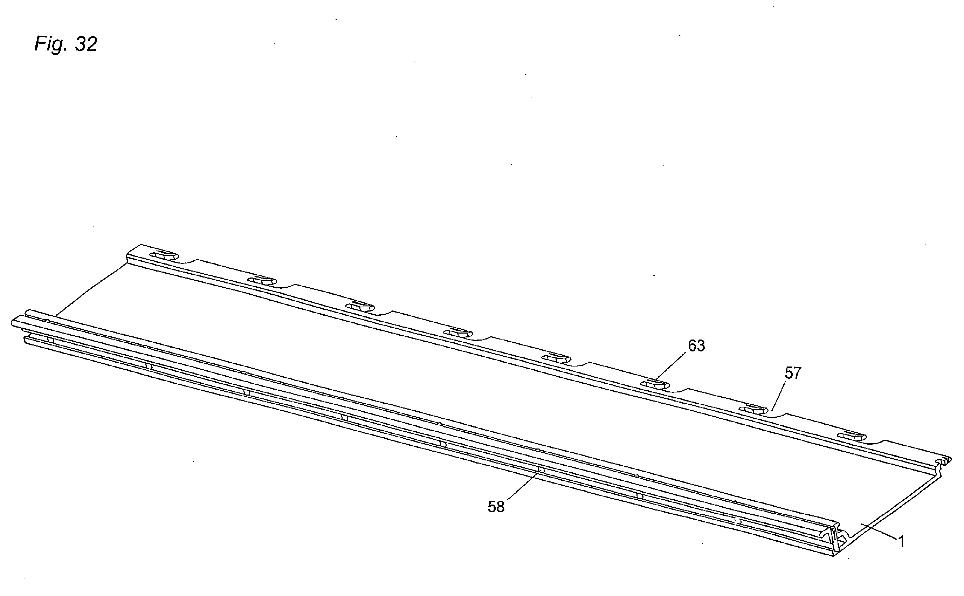

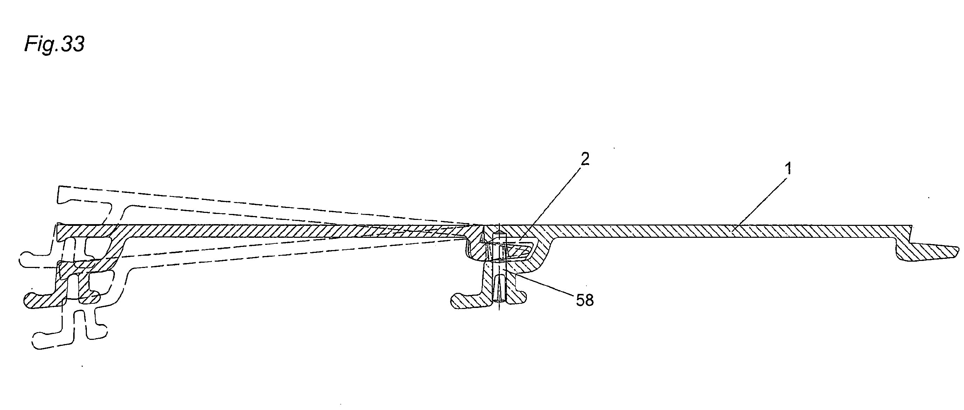

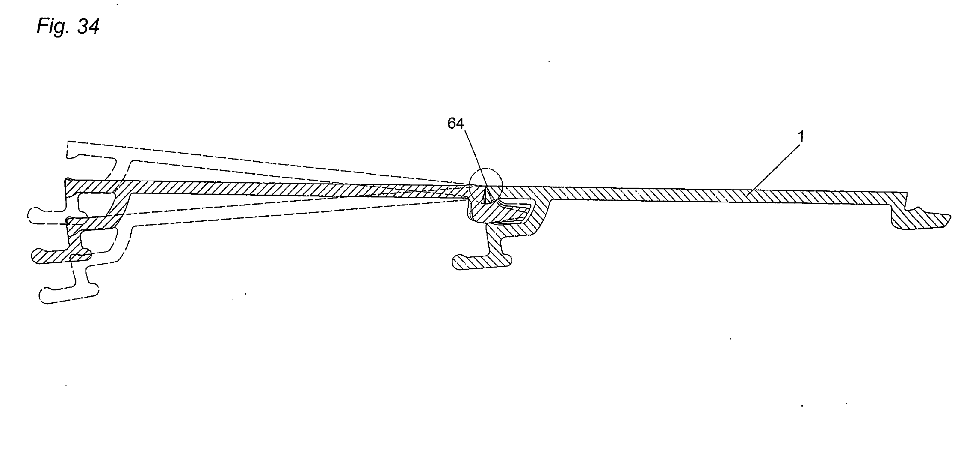

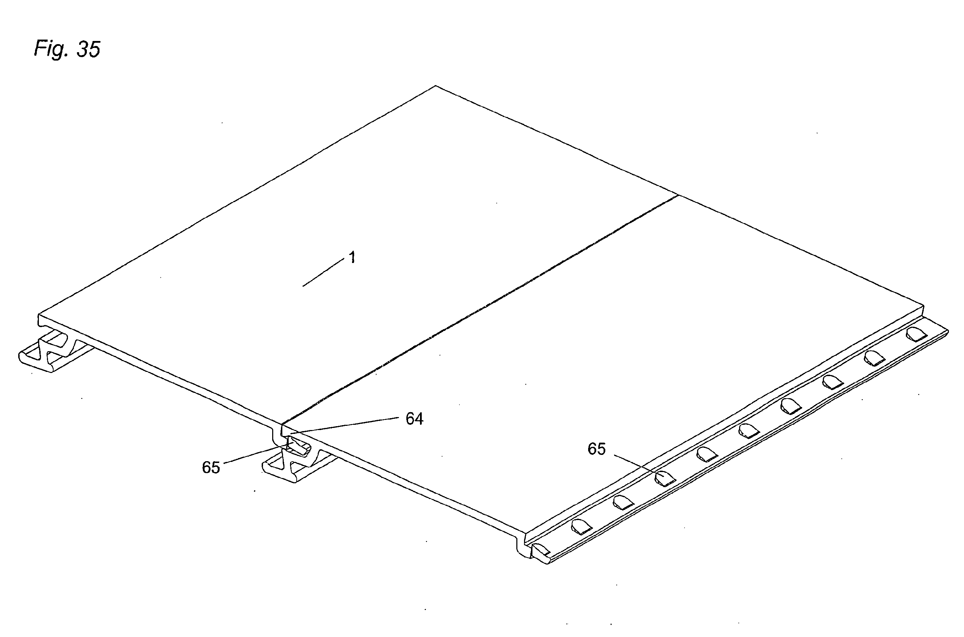

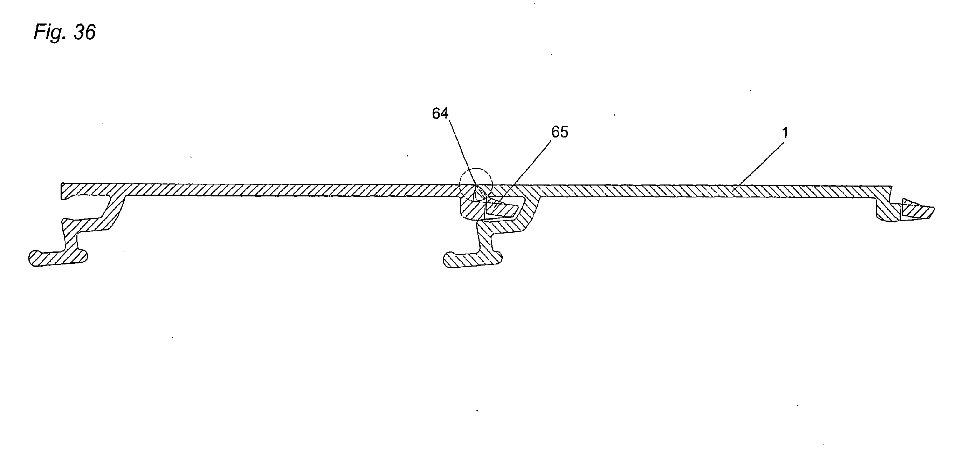

Der Gegenstand der Erfindung wird nachstehend anhand eines bevorzugten Ausführungsbeispiels und der beigefügten Zeichnungen beschrieben. Figuren 8, 9 und 10 zeigen die gewinkelte Anordnung von zumindest zwei Bauelementen gemäß der Efindung. Figuren 1-7, 11-18, 21, 24-28, 30, 35 und 36 zeigen flache Abschnitte der erfindungsgemäßen Abdeckung. Die gewinkelte Anordnung gemäß der Erfindung ist in diesen Figuren nicht dargestellt. Es zeigt: Fig. 1 in schaubildlicher Darstellung einen Teil einer Dachkonstruktion gemäß der vorliegenden Erfindung, wobei ein Bauelement vor dem Einsetzen in die Montageposition gezeigt ist, Fig. 2 die Dachkonstruktion entlang des Führungselements geschnitten, Fig. 3 die Dachkonstruktion quer zum Führungselement geschnitten, Fig. 4, in Stirnansicht, aneinander gefügte Bauelemente, welche mittels Klammerelementen miteinander verbunden sind, Fig. 5 in schaubildlicher Darstellung die Verbindung der Bauelemente mit der Unterkonstruktion mittels Halteelemente, Fig. 6 in schaubildlicher Darstellung einen Teil einer Dachkonstruktion, wobei eine Regenrinne zwischen zwei parallel angeordneten Führungselementen angeordnet ist, Fig. 7 die Dachkonstruktion der Fig. 6 quer zum Führungselement und zur Regenrinne geschnitten, Fig. 8 in Stirnansicht zwei Bauelemente in verschiedenen gegenseitigen Lagen, Fig. 9 im Schnitt die Nut-Feder-Verbindung zwischen zwei Bauelementen, Fig. 10 in Stirnansicht mehrere hintereinander angeordnete miteinander verbundene Profile, wobei erkennbar ist, wie durch entsprechende Anordnung der Profile eine gekrümmte Oberfläche erzielt ist, Fig. 11 im Schnitt miteinander verbundene Bauelemente, wobei die Abdichtung zweier gegeneinander verschwenkbarer Bauelemente ersichtlich ist, Fig. 12 im Schnitt aneinander befestigte Bauelementen, wobei der in die Nut eingelegte Dichtungskörper schlauchförmig ausgebildet ist, Fig. 13 im Schnitt aneinander befestigte Bauelemente, wobei der Dichtungskörper ein auf die Feder aufgebrachter Dichtungskörper ist, Fig. 14 in schaubildlicher, auseinandergezogener Darstellung zwei an den Stirnflächen aneinander angrenzende Bauelemente mit Einsatzkörpern, Dichtungselementen, sowie einem Dichtungsdistanzstück, Fig. 15 im Schnitt zwei an der Stirnfläche aneinander grenzende miteinander verbundene Bauelemente, Fig. 16 im Schnitt zwei an deren Stirnfläche aneinander grenzende Bauelemente, Fig. 17 im Schnitt zwei Bauelemente, welche über ihre Einsatzkörper mittels einer Schraubverbindung miteinander verbunden sind, Fig. 18 in schaubildlicher Darstellung einen Teils einer Dachkonstruktion, wobei zwei Bauelemente mittels eines Distanzstückes an deren Stirnflächen miteinander verbunden sind, Fig. 19 in schaubildlicher Darstellung ein Spannelement mit gegeneinander verstellbaren Spannbacken, Fig. 20 in schaubildlicher Darstellung das Spannelement der Fig. 19 in einer anderen Perspektive, Fig. 21 in schaubildlicher Darstellung zwei mit dem Spannelement der Fig. 19 miteinander verbundene Bauelemente, Fig. 22 in schaubildlicher Darstellung ein aus einem elastischen Spannteil und einer starren Klammer bestehendes Spannelement in geöffneter Anordnung, Fig. 23 in schaubildlicher Darstellung das Spannelement der Fig. 22, in geschlossener Anordnung, Fig. 24 in schaubildlicher Darstellung zwei mit dem Spannelement der Fig. 22 miteinander verbundene Bauelemente, Fig. 25 in schaubildlicher Darstellung einen Teil einer Dachkonstruktion gemäß einer weiteren Ausführungsform der vorliegenden Erfindung, Fig. 26 in schaubildlicher Darstellung einen Teil einer Dachkonstruktion gemäß einer weiteren Ausführungsform der vorliegenden Erfindung, wobei die Halteelemente mit Clips vorpositioniert werden können, Fig. 27 in schaubildlicher Darstellung einen Teil einer Dachkonstruktion gemäß einer weiteren Ausführungsform der vorliegenden Erfindung mit einer hölzernen Unterkonstruktion, Fig. 28 in schaubildlicher Darstellung mehrere Bauelemente, wobei angeschweißte Einsatzkörper die Bauelemente an ihren Stirnseiten mit einer Hakenverbindung verbinden, Fig. 29 in schaubildlicher Darstellung mehrere Bauelemente gemäß einer weiteren Ausführungsform der vorliegenden Erfindung, wobei an der Nut-Feder-Verbindung zusätzlich Federhaken vorgesehen sind, Fig. 30 in schaubildlicher Darstellung den Verschlussmechanismus an der Stoßfuge der Bauelemente der Fig. 29, Fig. 31 im Schnitt die Nut-Feder-Verbindung der Bauelemente der Fig. 29, wobei die Geschlossenheit der Stoßfuge veranschaulicht wird, Fig. 32 in schaubildlicher Darstellung ein Bauelement einer weiteren Ausführungsform der vorliegenden Erfindung, Fig. 33 im Schnitt die Nut-Feder-Verbindung, zweier Bauelemente der Fig. 32, Fig. 34 eine weitere Ausbildung der Nut-Feder-Verbindung in einer Schnittansicht, Fig. 35 in schaubildlicher Darstellung miteinander verbundene Bauelemente gemäß einer weiteren Ausführungsform der Erfindung und Fig. 36 im Schnitt die Nut-Feder Verbindung der Bauelemente der Fig. 35.

Der in Fig. 1 dargestellte Teil einer Dachkonstruktion gemäß der vorliegenden Erfindung zeigt einen Teil einer Unterkonstruktion 6, auf dem ein rohrförmiges Führungselement 7 angebracht ist. Die Unterkonstruktion 6 mit dem Führungselement 7 stellt den tragenden Teil der Dachkonstruktion dar, auf dem mittels Halteelemente 8 Bauelemente 1 befestigt sind, welche mit ihren Außenflächen die Oberfläche der Dachkonstruktion bilden. Jeweils zwei Bauelemente 1 sind an ihrer Längsseite über eine Nut-Feder-Verbindung 2 unter Vermeidung offener Stoßfugen miteinander verbunden. Offene Stoßfugen werden vermieden, indem die Oberkante des Bauelements oberhalb der Feder parallel zu dieser leicht vorspringend ausgebildet ist, sodass die Stoßfuge auch geschlossen ist, wenn die Feder nicht vollständig in die Nut eingeschoben, oder leicht schräg in dieser angeordnet ist. Sowohl unter der Nut als auch unter der Feder jedes Bauelementes 1 befindet sich je eine Längsrippe 3, so dass im eingebauten Zustand jeweils eine Längsrippe 3 unter der Nut so neben einer Längsrippe 3 unter der Feder eines angrenzenden Bauelements angeordnet ist, dass Spann- und/oder Klammerelemente 4 zum Zusammenspannen der Bauelemente 1 auf die Längsrippen 3 angesetzt werden können. Zudem weist jedes Bauelement 1 unter der Nut eine weitere Halterippe 5 auf, an der mittels der Haltelemente 8 die Verbindung mit der Unterkonstruktion hergestellt wird. Jede Nut-Feder-Verbindung 2 ist weiters durch ein in die Nut eingebrachtes Dichtungselement 12 abgedichtet.

Die in der Fig. 1 verwendeten Haltelemente 8 weisen einen unteren Teil 26, einen Klemmteil 27 und eine Spannschraube 28 auf. Der untere Teil 26 des Halteelementes 8 liegt auf dem Führungselement 7 der Unterkonstruktion 6 formschlüssig auf und kann vor Einbringen der Spannschraube 28 entlang des Führungselements 7 verschoben und um dieses geschwenkt werden. Im montierten Zustand liegt jeweils eine Halterippe 5 eines Bauelements 1 auf der oberen Seite des unteren Teiles 26 des Haltelements 8 auf, und wird mittels des Klemmteiles 27 des Halteelementes 8 zwischen dem unteren Teil 26 des Haltelementes 8 und dem Klemmteil 27 eingeklemmt, wobei die Spannschraube 28, welche durch den Klemmteil 27 und den unteren Teil 26 des Haltelementes 8 in das Führungselement 7 eingeschraubt ist, die benötigte Klemmkraft aufbringt. Dabei ist ein Endwulst der Halterippe 5 so innerhalb einer Ausnehmung des Klemmteiles des Haltelementes 8 angeordnet, dass eine formschlüssige Verbindung von Haltelement 8 mit dem Bauelement 1 hergestellt ist. Dennoch ist ein Verschieben des Bauelementes 1 entlang der Halterippe 5 innerhalb des Haltelementes 8, etwa in Folge einer Wärmeausdehnung des Bauelements 1 oder zum genauen Einrichten nach der Montage, weiterhin möglich. Dabei kann auf dem unteren Teil 26 und/oder in der Ausnehmung des Klemmteiles 27 eine die Gleitreibung vermindernde Beschichtung vorgesehen sein.

Bei der Montage eines neuen Bauelementes 1 wird die Feder des Bauelements 1 leicht schräg von oben in die Nut eines bereits montierten Bauelements 1 eingefügt und dann das Bauelement 1 in seine endgültige Position nach unten gekippt, so dass die Halterippe 5 auf dem unteren Teil des auf dem Führungselement 7 angeordneten Haltelementes 8 zu liegen kommt. Die Position des Haltelements 8 kann dabei durch Verschieben und Verschwenken in Bezug auf das Führungselement 7 den jeweiligen Erfordernissen angepasst werden. Wenn das Halteelement 8 in der richtigen Lage angeordnet ist, kann in das Führungselement 7 eine Gewindebohrung eingebracht werden, um das Haltelement mittels der Spannschraube 28 darauf zu befestigen. Alternativ dazu können die Gewindebohrungen bereits im Voraus in das Führungselement 7 eingebracht worden sein oder es können selbstbohrende oder selbstschneidende Schrauben verwendet werden. Um das neu zu montierende Bauelement während der Montage in der richtigen Position zu befestigen, kann das Bauelement 1 mit Spezialwerkzeug an das angrenzende Bauelement gedrückt werden, bis das Halteelement 8 an den Führungselement 7 befestigt ist. Nach dem Einrichten wird der Klemmteil 27 und der untere Teil 26 des Haltelementes 8 mit der Spannschraube 28 auf dem Führungselement 7 befestigt. Dabei wird der Klemmteil 27 auf den unteren Teil 26 gepresst und der Endwulst der Halterippe 5 in der Ausnehmung des Klemmteiles des Haltelementes 8 eingeschlossen. Auch nach der Befestigung des Haltelementes 8 kann das Bauelement 1 entlang der Nut in seine endgültige Position verschoben werden. Danach wird das nächste Bauelement montiert.

Die in Fig. 2 und Fig. 3 gezeigten Darstellungen dienen der weiteren Erläuterung der in Fig. 1 dargestellten Dachabdeckungskonstrukrion. Fig. 2 zeigt eine Schnittansicht der Dachkonstruktion entlang des Führungselementes 7, Fig. 3 ist eine Schnittansicht quer zum Führungselement 7. Fig. 2 verdeutlicht, wie die Bauelemente an der Stoßkante 11 bündig aneinander anschließen, so dass eine offene Stoßfuge vermieden wird. Da die Seitenfläche, an der die Feder angeordnet ist, mit der Seitenfläche, in der sich die Nut befindet, von der Stoßkante ausgehend einen spitzen Winkel einschließt, ist durch den unter der Stoßkante 11 gebildeten keilförmigen Hohlraum gewährleistet, dass die Stoßfuge auch dann an der Oberfläche geschlossen bleibt, wenn die Bauteile 1 an ihrer Stoßkante 11 einen flachen Winkel einschließen. Innerhalb der Nut ist ein Dichtungselement 12 angeordnet. Das Dichtungselement 12 wird dabei durch an beiden Seiten der Nutöffnung angeordnete Haltenasen oder Haltewülste innerhalb der Nut zurückgehalten. Dabei reicht das Dichtungselement 12 an der Unterseite der Nut über den Rand der Nut hinaus. Die Feder der Nut-Feder-Verbindung weist in ihrem äußeren Bereich einen im Wesentlichen keilförmigen Querschnitt auf, um bei der Montage ein Einführen der Feder in die Nut schräg von oben zu ermöglichen, und um eine winkelige Anordnung der Bauteile zuzulassen. Die Feder ist im Bereich ihres Ansatzes, bzw. im Bereich der Nutöffnung, an beiden Seiten in einem abdichtenden Eingriff mit dem Dichtungselement 12. Wie in Bezug auf Fig. 1 beschrieben, ist das Halteelement 8 mit einer Spannschraube 28 mit dem Führungselement 7 verbunden, wobei die Spannschraube in eine in das Führungselement 7 eingebrachte Gewindebohrung eingeschraubt ist. Dadurch sind der Klemmteil, sowie der untere Teil des Haltelementes 8 fest mit der Unterkonstruktion verbunden. Anstelle von vorangebrachten Gewindebohrungen und passenden Gewindeschrauben können auch selbstbohrende Schrauben verwendet werden. Der Endwulst der Haltrippe 5 ist so in der Ausnehmung des Klemmteiles 27 des Haltelementes 8 angeordnet, dass ein Verschieben des Bauelements 1 entlang des Endwulstes durch die Ausnehmung des Klemmteiles 27 hindurch möglich ist.

Fig. 4 zeigt aneinander befestigte Bauelemente 1, wobei die Befestigung an der Unterkonstruktion 6 der Einfachheit halber nicht dargestellt ist. Die in Fig. 4 dargestellten Bauelemente entsprechen im Wesentlichen den Bauelementen der vorhergehenden Figuren. Die Längsrippen 3, welche sich unter der Nut bzw. Feder jedes Bauelementes befinden, sind mit einem Klammerelement 4 verbunden, welches die Längsrippen 3 zweier angrenzender Bauelemente 1 zueinander drückt. Durch diese Klammerelemente wird gewährleistet, dass offene Stoßfugen an der Stoßkante 11 vermieden werden. Das Klammerelement 4 ist dabei eine elastisch verformbare, im Wesentlichen C-förmige Spange, die mit den Randwülsten der Längsrippen 3 im Eingriff ist. Die Klammerelemente 4 können auch durch verstellbare Spannelemente ersetzt werden, wie sie weiter unten beschrieben sind.

Fig. 5 ist eine perspektivische Ansicht einer weiteren. Ausführungsform der vorliegenden Erfindung, wobei die Bauelemente 1 in Bezug auf die Unterkonstruktion gleitbar und schwenkbar befestigt sein können. Das Führungselement 7 ist dabei ein auf einem Spanten der Unterkonstruktion 6 aufgesetztes nach oben offenes Rohrprofil. Wie bei dem in den Figuren 1 bis 3 beschriebenen Halteelement weist das Halteelement 8 der Fig. 5 einen unteren Teil 26, einen Klemmteil 27 sowie eine Spannschraube 28 auf. Zusätzlich dazu weist jedes Haltelement 8 innerhalb des offenen Rohrprofiles des Führungselementes 7 einen Nutenstein 24 auf, welcher an seiner Oberseite mit einer zu der Spannschraube passenden Gewindebohrung versehen ist. Die Spannschraube 28 ist dabei durch den Spalt des Rohrprofiles in die Gewindebohrung des Nutensteins 24 eingeschraubt, wodurch das Halteelement 8 auf das Führungselement 7 geklemmt wird. Dabei kann das montierte Halteelement 8 weiterhin entlang des Führungselements 7 verschoben werden, so lange die Klemmkraft nicht zu hoch ist. Da der Spalt des Rohrprofiles breiter ist als der Durchmesser der Spannschraube, kann das Halteelement in einem durch die Kanten des Spaltes begrenzenden Bereich um das Führungselement 7 geschwenkt werden. Weiters kann der Klemmteil 27 um die Spannschraube 28 geschwenkt werden, so dass ein eingespanntes Bauelement 1 um die Schraubenachse geschwenkt werden kann. Diese Ausführngsform kombiniert ein hohes Maß an Winkelfreiheit mit hoher Festigkeit. Die jeweilige Auslegung der Kontaktflächen der einzelnen Teile des Haltelementes 8, sowie des Führungselementes 7, erlaubt sowohl eine fixe als auch eine gleitende Verbindung zwischen diesen Elementen. Beispielsweise kann der Klemmteil, der untere Teil oder der Nutenstein mit einer die Gleitreibung vermindernden Beschichtung versehen sein, beispielsweise durch Hartanodisation, durch eine Teflonbeschichtung, oder eine herkömmliche Pulverbeschichtung. Mit einer reibungsmindernden Beschichtung des Nutensteins 24 und der Unterseite des unteren Teils 26 des Halteelementes 8 beispielsweise kann das Haltelement 8 entlang des Führungselementes 7 gleiten. Durch die Verwendung einer reibungssteigernden Oberfläche kann die Position am Führungselement 7 durch Aufbringen einer ausreichenden Klemmkraft fixiert werden. So kann beispielsweise der Nutenstein 24 mit einer Riffelung versehen sein, um ein Verrutschen im Führungselement 7 zu verhindern. Bei der Montage kann das bereits zusammengesetzte, jedoch noch nicht festgezogene, Haltelement 8 in die gewünschte Position in Bezug auf die Halterippe 5 eines zu befestigenden Bauelementes 1 geschoben und geschwenkt werden. Danach wird durch Anziehen der Spannschraube 28 die gewünschte Fixierung hergestellt.

Eine weitere Ausführungsform der vorliegenden Erfindung wird nun mit Bezug auf die Fig. 6 und 7 beschreiben.

Fig. 6 zeigt einen Teil einer Dachkonstruktion gemäß der vorliegenden Erfindung, wobei an den Stoßseiten der Bauelemente 1, 1' Dehnfugen vorgesehen sind, sowie eine Regenrinne unterhalb der Dehnfugen. Fig. 7 ist eine Schnittansicht, in der die Anordnung der Regenrinne unterhalb der Dehnfuge dargestellt ist. Die Unterkonstruktion weist dabei zwei parallel verlaufende Spanten auf, welche mit einem Verbindungselement 25 miteinander verbunden sind. Das Verbindungselement 25 dient dazu, den Abstand der Spanten zueinander festzulegen, sowie zur zusätzlichen Versteifung der Unterkonstruktion. Auf den Spanten der Unterkonstruktion 6 befinden sich jeweils Führungselemente 7, welche, wie in der Fig. 5, als offenes Rohrprofil ausgebildet sind. Die Bauelemente 1, 1' sind in gleicher Weise mittels Halteelemente 8 mit den Führungselementen 7 verbunden, wie dies mit Bezug auf Fig. 5 beschrieben wurde. Zusätzlich dazu weisen die Halteelemente 8 jeweils nach innen gerichtete Hakenelemente 10 auf, in welche eine Regenrinne 9 zwischen den beiden Spanten der Unterkonstruktion 6 eingehängt ist. Das Hakenelement 10 ist dabei mit dem unteren Teil des Haltelements 8 einteilig ausgebildet. Die Regenrinne 9 ist vorzugsweise ein U-Profil aus Gummi, wobei die obere, an die Bauelemente 1, 1' angrenzende Kante der Regenrinne gleichzeitig als Dichtungselement ausgebildet sein kann. Die an beiden Seiten der Unterkonstruktion 6 befestigten Bauelemente 1 enden jeweils im Bereich oberhalb der Regenrinne 9, wobei zwischen den Stoßseiten der Bauelemente 1 und 1' eine Dehnfuge 21 vorgesehen ist. Diese Ausführungsform ermöglicht es somit, einerseits Dehnfugen vorzusehen, um eine Wärmeausdehnung der Bauelemente 1 auszugleichen, andererseits kann somit ein Abschluss für Regenwasser auch in der Mitte einer großflächigen Dachkonstruktion vorgesehen werden.

Bezugnehmend auf die Fig. 8 bis 10 wird im folgenden beschrieben, wie mittels einer winkeligen Anordnung von Bauelementen 1 gekrümmte Fassaden- oder Dachoberflächen mittels der vorliegenden Erfindung angenähert werden können. In Fig. 8 sind verschiedene Anordnungen dargestellt, die das Bauelement 1' in Bezug auf das Bauelement 1 einnehmen kann. Dabei kann das Bauelement 1' in jedem Winkel von einer oberen Position bis zu einer unteren Position geschwenkt werden, ohne dass ein Versatz in der Stoßkante auftritt, d.h. dass ein Spalt im Stoßbereich auftritt. Der erzielbare Winkelbereich in dem das Bauelement 1' geschwenkt werden kann, ist dabei abhängig von der Geometrie der Nut-Feder-Verbindung 2, wie dies in Fig. 9 dargestellt ist. Durch die strichliert eingezeichneten Kreise sind die Bewegungsbahnen der die Feder des Bauelementes 1 im Bereich ihres Ansatzes übergreifenden Kanten der Nut angedeutet, wenn das Profil 1' um einen Schwenkpunkt 23, das ist die Anlage an der Längskante des Profils 1, geschwenkt wird. Dies ist auch der Bereich, an den die Nut des Bauelements 1' mit der Feder des Bauelements 1 in Eingriff ist. Dies ermöglicht ein Schwenken des Bauelementes 1' in Bezug auf das Bauelement 1 um den auf der Stoßkante befindlichen Schwenkpunkt 23, ohne dass dabei ein Versatz in der Stoßkante auftritt. Wie aus Fig. 9 ersichtlich, liegen die zugehörigen Bereiche der Flanken der Feder aufgrund deren Formgebung immer an den zugewandten Kanten bzw. Längswülsten der Nutaußenenden an, so dass ein sicherer gegenseitiger Halt zwischen den Profilen in jeder möglichen gegenseitigen Schwenkstellung gegeben ist. Da mehrere Profile hintereinander jeweils unter Bildung eines Winkels aneinander gereiht werden, kann eine Abfolge von Flächen gebildet werden, welche eine Fassaden- oder Dachkrümmung nachbilden kann. Solch eine Anordnung mehrerer Profile ist in Fig. 10 dargestellt. Dadurch, dass an der Oberfläche keine offene Fuge entsteht, und aufgrund des geringen Winkels ist die Kante nur aus der Nähe sichtbar. Aus einiger Entfernung ist optisch nur mehr eine im Wesentlichen glatte, gekrümmte Oberfläche erkennbar.

Die Fig. 11 bis 13 zeigen verschiedene Möglichkeit, um die Nut-Feder-Verbindung von Bauelementen abzudichten. In Fig. 11 ist das Dichtungselement 12 ein in die Nut des Bauelementes 1 eingelegter Dichtungskörper, wobei die Feder im Bereich der Federvorderfläche in einem abdichtenden Eingriff mit dem Dichtungselement 12 ist. Wie mit dem strichlierten Kreis dargestellt, weist die Vorderseite des Dichtungselementes 12, sowie die Federvorderfläche einen runden Querschnitt auf, wobei der Mittelpunkt jeweils im Schwenkpunkt 23 liegt. Somit ist über den gesamten Schwenkbereich der beiden Bauelemente ein dichtender Eingriff der Federvorderfläche mit dem Dichtungselement gewährleistet.

Fig. 12 zeigt einen in die Nut eingelegten, schlauchförmigen Dichtungskörper. Dies ist eine besonders kostengünstige und einfache Ausbildungsform. Der Dichtungskörper 12 wird dabei von der Feder zusammengedrückt, so dass auch unter verschiedenen Winkeln ein dichtender Eingriff erzielt wird.

Fig. 13 zeigt eine weitere Ausbildungsform der Erfindung, wobei das Dichtungselement 12 ein auf die Feder aufgebrachter Dichtungskörper ist. Dabei sind auf beiden Seiten der Feder Aufnahmefugen 16 ausgebildet, in welchen die freien Enden des Dichtungskörpers eingelegt sind. Der Dichtungskörper kann dabei in den Aufnahmefugen 16, etwa durch darin ausgebildete Haltenasen oder -wülste 15 zurückgehalten sein. Auch hierbei kann das Dichtungselement 12 entweder vor Ort bei der Montage oder schon im Werk auf den Bauteil 1 angebracht werden. In ähnlicher Weise kann das Dichtungselement 12 eine auf die Feder aufgebrachte Beschichtung oder eine aufgeklebte Folie sein.

Eine weitere Ausführungsform der vorliegenden Erfindung betrifft die Stoßseiten der Bauelemente. Dabei wird der endseitige Abschluss jedes Bauelementes 1 durch zumindest einen Einsatzkörper 17, 17' gebildet, der in den Bereichen der seitlichen Stirnfläche des Bauelementes 1 an der von der Außenfläche abgewandten Seite so befestigt ist, dass er einen Abschluss des Bauelementes 1 gegenüber einem Einsatzkörper eines angrenzenden Bauelementes 1 bildet. Die Befestigung des Einsatzkörpers 17 an dem Bauelement 1 kann dabei beispielsweise durch eine Klebeverbindung, eine Nietverbindung, eine formschlüssige Verbindung, eine Schraubverbindung, etc. erfolgen. Fig. 14 zeigt eine auseinandergezogene Darstellung zweier an den Stirnseiten aneinander angrenzender Bauelemente 1, 1' angeordneter Einsatzkörper 17, 17'. Die Bauelemente 1 werden im Allgemeinen entweder im Werk oder vor Ort vor der Montage auf die entsprechende Länge zugeschnitten und weisen daher an ihren Stirnseiten liegende Stoßflächen auf. Um eine formschlüssige Verbindung mit einem angrenzenden Bauelement, wie etwa eine Nut-Feder-Verbindung, zu erzielen, werden die Einsatzkörper 17 bzw. 17' an den Enden der Bauelemente 1 bzw. 1' befestigt. In Fig. 14 weist die Nut-Feder-Verbindung der Einsatzkörper 17 und 17' ein Dichtungselement 19 auf. Um eine vollständige Abdichtung der Dachkonstruktion auch an den Ecken der Bauelemente 1, 1' zu erzielen, ist das Dichtungselement 19 über einen Fortsatz 19' in einem formschlüssigen Eingriff mit dem Dichtungselement 12' des Bauelements 1'. Die Anbindung des Dichtungselements 19 an das Dichtungselement 12 des Bauelements 1 wird mittels eines Dichtungsübergangsstückes 20 erzielt. Um eine vollständige Abdichtung rund um das Bauelement 1 zu erzielen, ist es möglicherweise erforderlich, Einsatznuten 29 in die Stoßflächen der Bauelemente 1 und/oder 1' zu fräsen, die das Dichtungselement 19 bzw. Dichtungsübergangsstück 20 aufnehmen.

Die Verwendung von Einsatzkörper ermöglicht nicht nur eine Abdichtung der Stoßfugen und eine formschlüssige Verbindung, so dass die Bauelemente 1, 1' über die Stoßkante eine ebene Oberfläche bilden, sondern sie ermöglicht auch eine Fixierung der Bauelemente miteinander. Dabei können die Einsatzkörper aneinander geklebt, geschraubt, genietet, geklemmt oder mit anderen bekannten Verfahren miteinander verbunden sein.

Die Fig. 15 bis 17 zeigen verschiedene Ausbildungsformen von Einsatzkörpern 17 im Querschnitt. In den Figuren 15 und 16 weisen die Einsatzkörper 17 und 17' gegenüberliegende Halterippen 13 auf, an denen Spann- oder Klammerelemente 4 angebracht sind. Bevorzugterweise sind die Abmessungen der Halterippen 13 so gewählt, dass dieselben Spann- und/oder Klammerelemente 4 verwendet werden können, wie sie für die Fixierung der Nut-Feder-Verbindung an der Längsseite der Bauelemente 1 verwendet werden. Bevorzugterweise werden jedoch Spannelemente verwendet, die kein, oder nur ein geringes Spiel der Einsatzkörper zueinander zulassen, um die Dichtheit und die Geschlossenheit der Stoßfuge zu gewährleisten. Die Einsatzkörper können auch mittels einer Schraubverbindung aneinander befestigt sein, dies ist in Fig. 17 dargestellt.

Fig. 18 zeigt eine weitere Ausführungsform der vorliegenden Erfindung, wobei in der Stoßfuge ein Distanzstück 22 formschlüssig auf die Profile der Bauelemente 1 aufgeschoben ist. Das Distanzstück kann mit Dichtungselementen versehen sein, oder Durchlässe für Regenwasser aufweisen, das in einer Regenrinne 9 abgeleitet wird, wie dies zuvor mit Bezug auf Fig. 6 und 7 beschrieben wurde. Das Halteelement 8 ist in dieser Ausführungsform mittels zweier Niete 37 auf dem Führungselement 7 befestigt. Die Ausnehmung des Klemmteils 27 weist ein flaches Profil auf, sodass das Bauelement 1 darin auch schräg zum Führungselement eingespannt sein kann, wie dies mit Bezugnahme auf Fig. 25 noch genauer beschrieben wird.

Bezugnehmend auf die Fig. 19-21 wird im Folgenden ein Spannelement gemäß der vorliegenden Erfindung beschrieben. In den Fig. 19 und 20 ist das Spannelement in zwei Ansichten dargestellt. Das Spannelement 30 besteht aus einem Spannkörper 31, einem Spannblock 36, einer Spannschraube 33 sowie einer Mutter 34. Der Spannkörper 31 weist an einem Ende eine nach oben abstehenden Spannbacke 32 auf, sowie im unteren Bereich eine längs durch den Spannkörper 31 verlaufende Aufnahme für den Spannblock 36 sowie die Spannschraube 33. Der Spannblock 36 weist ebenfalls eine der Spannbacke 32 des Spannkörpers 31 gegenüberliegende Spannbacke 32' auf. Die Mutter 34 sitzt formschlüssig einer Aufnahme in dem Spannkörper 31, so dass sie bei einem Einschrauben der Spannschraube 33 in ihrer Position festgehalten wird. Der Spannblock 36 weist ebenfalls eine Aufnahme für die Spannschrauben 33 auf, und ist entlang einer Führung des Spannkörpers 31 entlang der Spannschraube 33 verschiebbar, so dass die Spannbacken 32 und 32' bei einem Verschieben des Spannblockes 36 aufeinander zu bewegt werden können. Wird nun die Spannschraube 33 in die festgehaltene Mutter 34 hineingeschraubt, dann drückt der Kopf der Spannschraube 33 auf den Spannblock 36, wodurch die Spannbacke 32' des Spannblocks 36 wie bei einem Schraubstock in Richtung der Spannbacke 32 des Spannkörpers 31 gedrückt wird. Die Spannbacken 32 und 32' weisen jeweils eine Aufnehmung 35 auf, welche formschlüssig auf die Längsrippen 3 von aneinander gefügten Bauelementen 1 passen. Somit kann, wie dies in Fig. 21 dargestellt ist, dass Spannelement 30 auf die Längsrippen 3 der Bauelemente 1 aufgesetzt werden. Durch Anziehen der Spannschraube 33 können somit die Längsrippen 3 gegeneinander gepresst und die Bauelemente somit miteinander verspannt werden.

Mit Bezugnahme auf die Fig. 22-24 wird im Folgenden eine weitere Ausbildungsform eines Spannelementes 40 gemäß der vorliegenden Erfindung beschrieben. In Fig. 22 ist das Spannelement 40 in einer gelösten Stellung dargelegt. Das Spannelement 40 besteht aus einem elastischen Spannteil 41, sowie einer starren Klammer 42. Der elastische Spannteil 41 weist zwei mittels Federrippen 44 verbundene Seitenteile 43, 43' mit innenliegenden Aufnehmungen 45 auf, wobei die Seitenteile 43, 43' elastisch gegeneinander zusammendrückbar sind. Die Außenseiten der Seitenteile 43,43' sind in Bezug auf eine gemeinsame Mittelfläche keilförmig ausgebildet, sodass der elastische Spannteil 41 ein schmales Ende und ein breites Ende aufweist. Die starre Klammer 42 weist einen im Wesentlichen C-förmigen, sich entlang der Mittelfläche verjüngenden Querschnitt auf, so dass sich ebenfalls ein schmales Ende sowie ein breites Ende ergeben. Dabei ist die Öffnung der starren Klammer 42 an ihrem breiten Ende groß genug, um das schmale Ende des elastischen Spannteiles 41 in einem entspannten Zustand aufzunehmen. Wird nun der elastische Spannteil 41 in die starre Klammer 42 hineingeschoben, so werden die Seitenteile 43, 43' aufgrund des enger werdenden Querschnitts der starren Klammer 42 zusammengepresst. Der elastische Spannteil 41 wird dabei soweit in die starre Klammer 42 eingeschoben, bis eine Verzahnung 46 an der äußeren Seite der Seitenteile 43, 43' in einer Raste 47 der starren Klammer 42 einrastet. Dies ermöglicht es, den elastischen Spannteil 41 auf eine definierte Größe zusammenzupressen. Die Fig. 23 zeigt das Spannelement 40, wobei die starre Klammer 42 vollständig auf den elastischen Spannteil 41 aufgeschoben ist.

Um zwei angrenzende Bauteile 1 an deren Längsrippen mit dem Spannelement 40 zusammenzuspannen, wird der elastische Spannteil 41 in seiner entspannten Stellung auf die Längsrippen 3 aufgesetzt, so dass die Aufnehmungen 45 der Seitenteile 43, 43' an beiden Seiten der Längsrippen 3 angeordnet sind. Durch Aufschieben der starren Klammer 2 auf den elastischen Spannteil 41 werden die Längsrippen 3 in den Aufnehmungen 45 der Seitenteile 43, 43' eingeklemmt, und ist in ihre endgültige Position zueinander zusammengedrückt. Die Fig. 24 zeigt das Spannelement 40 in einer auf den Bauteilen 1 montierten Anordnung.

In Fig. 25 ist eine weitere Ausführungsform der vorliegenden Erfindung dargestellt, wobei das Halteelement 8 mittels einer einzelnen Spannschraube 28 befestigt ist, die in einen Einschraubkanal 48 des Führungselements 7 eingeschraubt ist. Der untere Teil 26, sowie der Klemmteil 27 des Halteelements 8 sind mit einem Langloch zur Aufnahme der Spannschraube 28 versehen und weisen im Auflagebereich je ein rundes Profil auf, sodass das Halteelement in einem vom Langloch begrenzten Bereich um das runde Profil des Führungselements 7 geschwenkt werden kann. Die für die Aufnahme des Wulstes der Halterippe 5 des Bauteils 1 vorgesehene Ausnehmung 49 im Klemmteil 27 verbreitert sich von der Mitte ausgehend nach beiden Seiten, sodass die Ausnehmung 49 nur in der Mitte die selbe Breite aufweist wie der Wulst der Halterippe 5. Dadurch kann das Bauelement 1 in einem durch den Öffnungswinkel der Ausnehmung 49 begrenzten Bereich in dem Klemmteil geschwenkt werden.

In Fig. 26 ist eine weitere Ausführungsform der vorliegenden Erfindung dargestellt, die im Wesentlichen der in Fig. 1 beschriebenen Ausführungsform entspricht. Zusätzlich sind jedoch die Halteelemente 8 mit Clips versehen, mit denen die Halteelemente 8 auf dem Führungselement 7 angeklammert werden können. Dabei kann das Halteelement bei der Montage vorpositioniert werden, und behält seine Position, bis die Spannschraube 28 eingesetzt wird.

Bezug nehmend auf die Fig. 27 wird eine weitere Ausführungsform der vorliegenden Erfindung beschrieben, die sich vor allem für Anwendungen eignet, bei denen eine Verwendung maschinell vorgebogener, verhältnismäßig breiter Bauelemente zu aufwendig erscheint. Als Bauelemente 1 kommen dabei schmale, vorzugsweise flexible Profile zum Einsatz, die bei der Montage elastisch angebogen werden.

Als Unterkonstruktion werden dabei auf Sparrenträgem 59 aus Schichtholz schmale Spuntschalungsbretter 60 gebogen und montiert, die eine Gewölbte Dachfläche hinreichend genau nachbilden, um die von außen sichtbaren Bauelemente darauf zu montieren. Die Sparrenträger können dabei automatisiert maschinell gefertigt sein, etwa durch eine Bearbeitung mittels CNC-Fräsen. Als Führungselemente werden dünne Alu-Montageprofile 62, vorzugsweise entlang der Dachneigung, auf die Holzschalung aufgeschraubt. Die Montageprofile 62 sind torsions- und biegeweich ausgebildet, sodass sie sich der Krümmung der Kontur anpassen können. Auf die Holzschalung kann auch eine diffusionsoffene Unterdachbahn 61 aufgelegt sein, die mit den Montageprofilen 62 befestigt wird.

In einen Einschraubkanal des Montageprofils 62 werden die Halteelemente 8 für die Bauelemente 1 geschraubt und die Profile gleitfähig fixiert. Die Halteelemente 8 ermöglichen in dieser Ausführungsform nur mehr zwei Freiheitsgrade (Rotation um die Schraubachse und Gleitlagerung in Längsrichtung der Profile), da die Oberkante des Montageprofils 62 weitgehend parallel zur Dachfläche ist. Die Montageprofile 62 sind ausreichend nahe aneinander angeordnet, um für die notwendige Pressung in den Stoßfugen zu sorgen, und um ein Ausweichen/ Biegedrillknicken der Dachprofile nach oben oder unten am gedrückten Rand des Biegequerschnitts zu verhindern.

Die Verbindung zwischen den Bauelementen an der Stoßfuge wird mit einer Hakenverbindung bewerkstelligt, deren Ausführung in Fig. 28 deutlicher zu erkennen ist. In der in Fig. 28 dargestellten Ausführungsform sind die Einsatzkörper 17 mittels einer Schweißverbindung 51 an den Bauelementen 1 befestigt. Auf einem Einsatzkörper sind zwei Sperrhaken 52 angeordnet, die in dazupassende Hakenöffnungen 53 auf dem gegenüberliegenden Einsatzkörper passen. Um die Verbindung der Bauelemente an ihrer Stoßfuge bei der Montage herzustellen, muss das Ende mit den Sperrhaken mit einem Versatz zur Längsfuge, in der Größenordnung von einer Hakenlänge, in die Hakenöffnungen 53 des aufnehmenden Einsatzkörpers eingeschoben werden und dann zum Verschluss der Längsfugen zugeschoben werden. Die Bewegung, die notwendig ist, um das neue Bauelement 1 zu montieren ist in Fig. 28 durch den abgewinkelten Pfeil angedeutet.

Eine weitere vorteilhafte Ausgestaltung der Erfindung betrifft die in Fig. 29 dargestellten Bauelemente. Dabei sind auf der Feder der Bauelemente 1 eine Reihe von Federhaken 55 ausgestanzt, welche wiederum in Schlitze 56 in der Nutkammer eingeschoben werden und dann durch Verschieben in Längsrichtung verriegelt werden. Dies ermöglicht einen Fugenverschluss ohne Spann- oder Klammerelementen. Da das Bauelements jedoch nicht mehr mit Versatz zur Längsfuge eingeschoben werden kann, um den Hakenverschluss an der Stirnfuge zusammenzustecken, muss die Endstoßverbindung anders gelöst werden als bei der Hakenverbindung der Fig. 27 und 28.

Um dennoch eine durchgängige Hakenverbindung auch an den Stoßfugen bereitzustellen, wird ein Riegelverschluss 54 angewendet, der in Fig. 30 genauer gezeigt ist. Die Einsatzkörper 17 sind den in Fig. 28 dargestellten ähnlich, mit dem Unterschied, dass die Sperrhaken 52 an einem Riegelverschluss 54 angebracht sind, mit dem die Sperrhaken 52 entlang dem Stimende verschoben werden können. Die Sperrhaken 52 werden bei der Montage bei geöffnetem Riegelverschluss in die Hakenöffnungen 53 eingeschoben, indem das Bauelement 1 mit geschlossener Nut-Feder-Verbindung 2 entlang der Längsfuge verschoben wird. Durch verschieben des Riegelverschlusses 54 wird die Verbindung verriegelt. Das Loch an welchem in Fig. 30 der symbolische Verschiebepfeil ansetzt, soll dabei eine Senkbohrung darstellen, wo beispielsweise mit einem zangenartigen Werkzeug angesetzt werden kann.

Fig. 31 erläutert, wie auch hier ein Schwenkbereich bereitgestellt wird, ohne dass es zu einem Fugenversatz kommt. Dabei können die Bauteile um einen virtuelle Schwenkpunkt gegeneinander verschwenkt werden, der sich an der Kontaktstelle der Bauelemente an der äußeren Seite der Stoßfuge befindet. Um einen Versatz an der Außenfläche zu vermeiden ist die Feder im Bereich des Federansatzes auf beiden Seiten mit einer Biegung versehen. Die Federöffnung ist hingegen mit einem bogenförmigen Wulst versehen, sodass die Bauelemente bei einem Verschwenken gegeneinander in den Kontaktstellen der Feder in diesem Bereich bogenformig aneinander gleiten. Die Geometrie der Nut-Feder-Verbindung ist dabei so, dass die Distanz von der Kontaktstelle zum Schwenkpunkt stets gleich bleibt, wodurch ein Versatz in der Stoßfuge vermieden wird. Um die Geschlossenheit der Stoßfuge im Schwenkpunkt zu gewährleisten, streicht die Oberkante der Ausstanzung der Feder beim Verschwenken genau die kreisförmige Kontur der Hinterwand der Nutkammer ab. Dies ist durch den strichlierten Kreis angedeutet. In Fig. 31 sind die ebene Anordnung eines Bauelements 1 im Bezug auf ein angrenzendes Bauelement mit durchgezogenen Linien, sowie seine maximal geschwenkten Positionen mit unterbrochenen Linien dargestellt.

Fig. 32 und 33 zeigen eine weitere Ausführungsform eines Bauelements 1, bei dem ein Verhaken der Nut-Feder-Verbindung 2 vorgesehen ist. Hierbei werden von unten in die Nutkammer Stifte 58 eingebracht (im gezeigten Fall Paßkerbstifte nach EN 28745) in welche wiederum im Federbereich ausgestanzte Hakenausnehmung 57 einrasten. Das Verriegeln geschieht analog zu der in Fig. 29 - 31 gezeigten Ausführungsform.

Wie aus Fig. 33 zu ersehen ist, wird dabei bei Verschwenkung der Bauteile die Kontaktkante der Ausstanzung im Bereich des Haltestifts von diesem eingedrückt. Dieser Überschneidungsbereich kann durch elastische oder plastische Verformung der Hakenzunge aufgenommen werden. Zusätzlich kann eine Verformungsreserve, etwa in Form von Ausgleichsschlitzen 63 (dargestellt in Fig. 32) im Zungenbereich, geschaffen werden, wobei die Schlitze mittels Laser- oder Wasserstrahlschneiden erzeugt werden können. Dadurch ergibt sich eine zusätzliche elastische Federwirkung, welche die Bauelemente aneinander drückt.

In Anwendungen, bei denen, etwa aufgrund der Dachform oder der Flexibilität der Profile, geringere Ansprüche an die Festigkeit und die Klammerkraft an der Nut-Feder-Verbindung gestellt werden, kann auch eine Schnappverbindung 64 der Bauelemente 1 vorgesehen sein. Zwei bevorzugte Ausführungsformen solcher Profile sind in den Fig. 34-36 dargestellt. Die Schnappverbindung 64 der Ausführungsform der Fig. 34 weist an der Oberseite der Federöffnung einen Haltewulst auf, welcher in eine am Federansatz vorgesehene Raste eingreift. Durch das Runde Profil von Haltewulst und Raste können die Bauelemente gegeneinander verschwenkt werden. Dabei muss beim Einschnappprozess der vordere Teil der oberen Wand der Nutkammerausformung beim Einschieben der Feder elastisch nach oben ausweichen.

Die Fig. 35 und 36 zeigen eine Ausführungsform der Erfindung, bei der die Schnappverbindung durch Teilausstanzungen 65 im Bereich der Feder gebildet wird. Diese regelmäßig angeordneten Stanzungen stehen leicht nach oben ab, und bilden elastische Federn welche ihrerseits beim Einschnappprozess um das Biegegelenk (gebildet durch den vorderen nicht ausgestanzten Bereich der nach oben abstehenden, elastischen Feder) elastisch ausweichen und in den mit einem kreisförmigen Querschnitt versehenen Profilwulst am oberen Schenkel der Nutkammer einrasten. Auch hier ist die Drehgelenkfunktion der Verbindung hergestellt.

## Patentansprüche

1. Abdeckung, Verkleidung oder dergleichen von Bauwerken bzw. Bauwerksteilen, bestehend aus flächigen Bauelementen (1) die über Nut-Feder-Verbindungen (2) unter Vermeidung offener Stoßfugen verbunden sind, wobei jedes Bauelement (1) im Bereich der Nut-Feder-Verbindung (2) durch Verbindungselemente (4) mit einem benachbarten Bauelement (1) zusammengespannt wird, und wobei an jedem Bauelement (1) im Verbindungsbereich zum benachbarten Bauelement (1) von der der Außenfläche abgewandten Seite über das Verbindungselement (4) hinausragend eine Halterippe (5) oder dergleichen absteht, mittels derer die Bauelemente (1) an einer Unterkonstruktion (6) festlegbar sind, **dadurch gekennzeichnet. dass** jeweils zwei aneinandergrenzende Bauelemente (1) sich in einer an der äußeren Oberfläche gelegenen Stoßkante (11) berühren, und die Oberflächen von zumindest zwei der aneinandergrenzenden Bauelemente (1) an ihrer Stoßkante (11) einen flachen Winkel einschließen, wobei diese gewinkelte Anordung **dadurch** möglich ist, dass die Seitenfläche, an der die Feder angeordnet ist, mit der Seitenfläche, in der sich die Nut befindet, von der Stoßkante ausgehend einen spitzen Winkel einschließt, wobei unter der Stoßkante ein keilförmiger Hohlraum gebildet wird, wenn die zwei Bauplatten in einer flachen Ebene liegen und aneinadergrenzen.

2. Abdeckung, verkleidung oder dergleichen nach Anspruch 1, **dadurch gekennzeichnet, dass** jedes Bauelement (1) im Bereich der Nut-Feder-Verbindung (2) an der der Außenfläche abgewandten Seite von dem Bauelement (1) abstehend Längsrippen (3) für das Ansetzen von Verbindungselementen, wie Spann- und/oder Klammerelementen (4), zum Zusammenspannen der Bauelemente (1) aufweist.

3. Abdeckung, Verkleidung oder dergleichen nach Anspruch 1 oder 2, **dadurch gekennzeichnet, dass** auf der Unterkonstruktion (6) Führungselemente (7) zum Anbringen von Halteelementen (8) für den Eingriff an den Halterippen (5) der Bauelemente (1) ausgebildet sind.

4. Abdeckung, Verkleidung oder dergleichen nach Anspruch 3, **dadurch gekennzeichnet, dass** das Halteelement (8) entlang des Führungselements (7) verschiebbar ist und/oder wobei das Bauelement (1) in dem Halteelement (8) entlang der Halterippe (5) verschiebbar ist, und/oder wobei das Bauelement (1) an der Halterippe (5) im Bezug auf das Führungselement (7) in ein, zwei oder drei Richtungen schwenkbar ist

5. Abdeckung, Verkleidung oder dergleichen nach einem der Ansprüche 3 bis 4, **dadurch gekennzeichnet, dass** die Unterkonstruktion (6), an der die Halteelemente (8) angebracht sind, eine Rohrkonstruktion, eine Konstruktion aus Trägerprofilen aus Stahl, Aluminium, Holz oder Kompositbauteilen, oder eine Kombination daraus ist.

6. Abdeckung, Verkleidung oder dergleichen nach Anspruch 1 oder 2, **dadurch gekennzeichnet, dass** die Feder in ihrem äußeren Bereich einen im Wesentlichen keilförmigen Querschnitt aufweist, wobei im eingesetzten Zustand die Mittelebene der Feder entweder parallel zur Mittelebene der Nut verläuft, oder mit dieser einen spitzen Winkel einschließt.

7. Abdeckung, Verkleidung oder dergleichen nach Anspruch 6, **dadurch gekennzeichnet, dass** die Nut-Feder-Verbindung (2) zumindest ein Dichtungselement (12) aufweist, wobei das Dichtungselement (12) vorzugsweise ein in die Nut eingelegter Dichtungskörper oder ein auf die Feder aufgebrachter Dichtungskörper ist.

8. Abdeckung, Verkleidung oder dergleichen nach Anspruch 7, **dadurch gekennzeichnet, dass** in der Nut eine oder mehrere Haltenasen (14) angeordnet sind, welche das Dichtungselement (12) in der Nut zurückhalten, wobei vorzugsweise das Dichtungselement (12) an zumindest einer Seite der Nut über den Rand der Nut hinausreicht und das Dichtungselement (12) die Innenseite der Nut vorzugsweise vollständig auskleidet

9. Abdeckung, Verkleidung oder dergleichen nach Anspruch 1 oder 2, **dadurch gekennzeichnet, dass** jedes Bauelement (1) endseitig zumindest je einen Einsatzkörper (17) mit vorzugsweise profilierten Stirnflächen aufweist, die in den Bereichen der seitlichen Stirnfläche an der von der Außenfläche abgewandten Seite, beispielsweise durch eine Klebeverbindung, eine Schweißverbindung, eine Nietverbindung, eine formschlüssige Verbindung, eine Schraubverbindung, etc., so befestigt sind, dass sie einen Abschluss des Bauelements (1) gegenüber einem Einsatzkörper (17) eines angrenzenden Bauelements (1) bilden, wobei vorzugsweise je zwei Einsatzkörper (17) aneinandergrenzender Bauelemente eine formschlüssige Verbindung, vorzugsweise eine Nut-Feder-Verbindung (18), ausbilden und wobei vorzugsweise die Einsatzkörper (17) angrenzender Bauelemente mittels einer Schraubverbindung, einer Klebeverbindung, einer Netverbindung, einer Steckverbindung oder mittels Klammer- oder Spannelementen (4) aneinander befestigt sind.

10. Abdeckung, Verkleidung oder dergleichen nach Anspruch 9, **dadurch gekennzeichnet, dass** zumindest einer der Einsatzkörper (17) zumindest ein Dichtungselement (19) aufweist.

11. Abdeckung, Verkleidung oder dergleichen nach Anspruch 10, **dadurch gekennzeichnet, dass** die Dichtungselemente/das Dichtungselement (19) auf dem Einsatzkörper (17) eines Bauelements, entweder über Dichtungsdistanzstücke (20) oder über direkten Kontakt, mit den Dichtungselementen (12) der angrenzenden Nut-Feder-Verbindungen (2) der Längsseite des selben Bauelements, bzw. mit den Dichtungselementen (12) der angrenzenden Nut-Feder-Verbindungen (2) der Längsseite des angrenzenden Bauelements, in einem formschlüssigen Eingriff sind/ist.

12. Abdeckung, Verkleidung oder dergleichen nach Anspruch 1 oder 2, **dadurch gekennzeichnet, dass** zwei angrenzende Bauelemente an deren Stirnseiten mittels eines Distanzstückes 22, etwa aus PVC, miteinander verbunden sind.

13. Abdeckung, Verkleidung oder dergleichen nach einem der Ansprüche 2 bis 12, **dadurch gekennzeichnet, dass** die Bauelemente (1) je zwei Längsrippen (3) für das Ansetzen von Spann- und/oder Klammerelementen (4) für eine gegenseitige Fixierung entlang der Nut-Feder-Verbindung (2) aufweist, wobei die eine Längsrippe (3) parallel zur Feder und unterhalb derselben angeordnet ist und die zweite Längsrippe (3) parallel zur Nut und zwischen der Nut und der Halterippe (5) für die Befestigung des Bauelements (1) an der Unterkonstruktion (6) angeordnet ist, sodass jede Längsrippe (3) unter der Nut an eine Längsrippe (3) unter der Feder des angrenzenden Bauelements angrenzend angeordnet ist.

14. Abdeckung, Verkleidung oder dergleichen nach Anspruch 13, **dadurch gekennzeichnet, dass** beide entlang der Nut-Feder-Verbindung (2) verlaufende Längsrippen (3) zweier angrenzender Bauelemente voneinander abgewandte Randwülste zur Befestigung der Spann- und/oder Klammerelemente (4) daran aufweisen.

15. Abdeckung, Verkleidung oder dergleichen nach Anspruch 14, **dadurch gekennzeichnet, dass** das Spannelement zwei, etwa mittels einer Schraubspindel zusammenziehbare Spannbacken aufweist, welche mit den Randwülsten der Längsrippen (3) im Eingriff sind.

## Claims

1. A covering, cladding or the like for buildings or parts of buildings, comprising flat structural elements (1) which are connected by way of groove and tongue joints (2) whilst avoiding open butt joints, wherein each structural element (1) is clamped together with an adjacent structural element (1) in the region of the groove and tongue joint (2) by way of connecting elements (4), and wherein on each structural element (1) a holding rib (5) or the like, by means of which the structural elements (1) are capable of being fixed on a substructure (6), projects, extending beyond the connecting element (4), in the connection area towards the adjacent structural element (1) from the side facing away from the outer face, **characterized in that** in each case two adjacent structural elements (1) touch each other on a butt edge (11) situated on the outer surface, and the surfaces of at least two of the adjacent structural elements (1) form a flat angle on their butt edge (11), wherein this angled arrangement is possible on account of the fact that, starting from the butt edge, the lateral face on which the tongue is situated forms an acute angle with the lateral face in which the groove is situated, wherein a wedge-shaped cavity is formed below the butt edge when the two structural plates are situated in a flat plane and are adjacent to each other.

2. A covering, cladding or the like according to claim 1, **characterized in that** in the region of the groove and tongue joint (2) on the side facing away from the outer face each structural element (1) has longitudinal ribs (3) projecting from the structural element (1) for the attachment of connecting elements, such as clamping and/or clip elements (4), for clamping the structural elements (1) together.

3. A covering, cladding or the like according to claim 1 or 2, **characterized in that** guide elements (7) for the application of holding elements (8) for engagement on the holding ribs (5) of the structural elements (1) are formed on the substructure (6).

4. A covering, cladding or the like according to claim 3, **characterized in that** the holding element (8) is displaceable along the guide element (7) and/or wherein the structural element (1) is displaceable in the holding element (8) along the holding rib (5), and/or wherein the structural element (1) is pivotable in one, two or three directions on the holding rib (5) with respect to the guide element (7).

5. A covering, cladding or the like according to one of claims 3 to 4, **characterized in that** the substructure (6) on which the holding elements (8) are attached is a tubular structure, a structure of support profiles of steel, aluminium, wood or composite components, or a combination of them.

6. A covering, cladding or the like according to claim 1 or 2, **characterized in that** the tongue has a substantially wedge-shaped cross-section in its outer region, wherein in the inserted state the central plane of the tongue either extends parallel to the central plane of the groove or forms an acute angle with it.

7. A covering, cladding or the like according to claim 6, **characterized in that** the groove and tongue joint (2) has at least one sealing element (12), wherein the sealing element (12) is preferably a sealing member inserted into the groove or a sealing member attached to the tongue.

8. A covering, cladding or the like according to claim 7, **characterized in that** one or more holding projections (14) are arranged in the groove and retain the sealing element (12) in the groove, wherein the sealing element (12) preferably extends beyond the edge of the groove on at least one side of the groove and the sealing element (12) covers the inside of the groove preferably completely.

9. A covering, cladding or the like according to claim 1 or 2, **characterized in that** the end of each structural element (1) has at least one respective insert member (17) with preferably profiled end faces which in the regions of the lateral end face are fastened to the side facing away from the outer face, for example by an adhesive join, a welded join, a riveted join, a join with positive locking, a screw fastening etc., in such a way that they form a termination of the structural element (1) with respect to an insert member (17) of an adjacent structural element (1), wherein in each case two insert members (17) of adjacent structural elements preferably form a join with positive locking, preferably a groove and tongue joint (18), and wherein the insert members (17) of adjacent structural elements are preferably fastened to each other by means of a screw fastening, an adhesive join, a riveted join, a plug and socket join or by means of clip and/or clamping elements (4).

10. A covering, cladding or the like according to claim 9, **characterized in that** at least one of the insert members (17) has at least one sealing element (19).

11. A covering, cladding or the like according to claim 10, **characterized in that** the sealing elements or the sealing element (19) on the insert member (17) of a structural element are or is in positively locking engagement with the sealing elements (12) of the adjacent groove and tongue joints (2) of the longitudinal side of the same structural element or with the sealing elements (12) of the adjacent groove and tongue joints (2) of the longitudinal side of the adjacent structural element either by way of sealing spacer members (20) or by way of direct contact.

12. A covering, cladding or the like according to claim 1 or 2, **characterized in that** two adjacent structural elements are connected to each other at their end faces by means of a spacer member 22, for example of PVC.

13. A covering, cladding or the like according to any one of claims 2 to 12, **characterized in that** the structural elements (1) have in each case two longitudinal ribs (3) for the attachment of clamping and/or clip elements (4) for mutual fixing along the groove and tongue joint (2), wherein one longitudinal rib (3) is arranged parallel to the tongue and below it and the second longitudinal rib (3) is arranged parallel to the groove and between the groove and the holding rib (5) for fastening the structural element (1 ) to the substructure (6), so that each longitudinal rib (3) below the groove is arranged adjacent to a longitudinal rib (3) below the tongue of the adjacent structural element.

14. A covering, cladding or the like according to claim 13, **characterized in that** the two longitudinal ribs (3) of two adjacent structural elements extending along the groove and tongue joint (2) have raised edges-facing away from each other - for fastening the clamping and/or clip elements (4) to it.

15. A covering, cladding or the like according to claim 14, **characterized in that** the clamping element has two clamping jaws, which are capable of being drawn together by means of a screw spindle for example and which engage with the raised edges of the longitudinal ribs (3).

## Revendications

1. Revêtement, habillage ou similaire de bâtiments ou de parties de bâtiment, comprenant des éléments de construction (1) plats qui sont reliés au moyen d'assemblages à rainure et languette (2) en évitant des joints vifs, chaque élément de construction (1) étant assemblé dans la zone de l'assemblage à rainure et languette (2) par des éléments de liaison (4) avec un élément de construction (1) voisin, et une nervure de retenue (5) ou similaire débordant sur chaque élément de construction (1), dans la zone de liaison avec l'élément de construction (1) voisin, du côté opposé à la surface extérieure en dépassant de l'élément de liaison (4), nervure au moyen de laquelle les éléments de construction (1) peuvent être fixés sur une construction inférieure (6), **caractérisé en ce qu'**à chaque fois deux éléments de construction (1) contigus se touchent sur un rebord (11) situé sur la surface extérieure et les surfaces d'au moins deux des éléments de construction (1) contigus forment entre elles un angle plat sur leur rebord (11), cet agencement en angle étant rendu possible par le fait que la surface latérale, sur laquelle la languette est disposée, forme un angle aigu à partir du rebord avec la face latérale dans laquelle la rainure se trouve, une cavité en forme de clavette étant formée sous le rebord lorsque les deux panneaux de construction se situent dans un plan plat sont contigus.

2. Revêtement, habillage ou similaire selon la revendication 1, **caractérisé en ce que** chaque élément de construction (1) présente dans la zone de l'assemblage à rainure et languette (2) sur le côté opposé à la surface extérieure des nervures longitudinales (3) dépassant de l'élément de construction (1) pour la pose d'éléments de liaison, tels que des éléments de serrage et/ou des éléments de fixation (4), pour l'assemblage des éléments de construction (1).

3. Revêtement, habillage ou similaire selon la revendication 1 ou 2, **caractérisé en ce que** des éléments de guidage (7) sont formés sur la construction inférieure (6) pour le placement d'éléments de retenue (8) pour l'engagement sur les nervures de retenue (5) des éléments de construction (1).

4. Revêtement, habillage ou similaire selon la revendication 3, **caractérisé en ce que** l'élément de retenue (8) peut coulisser le long de l'élément de guidage (7) et/ou l'élément de construction (1) pouvant coulisser dans l'élément de retenue (8) le long de la nervure de retenue (5), et/ou l'élément de construction (1) pouvant basculer sur la nervure de retenue (5) par rapport à l'élément de guidage (7) dans une, deux ou trois directions.

5. Revêtement, habillage ou similaire selon l'une quelconque des revendications 3 à 4, **caractérisé en ce que** la construction inférieure (6), sur laquelle les éléments de retenue (8) sont placés, une construction tubulaire, une construction à base de profilés de support en acier, aluminium, bois ou éléments de construction composites ou une combinaison de ces éléments.

6. Revêtement, habillage ou similaire selon la revendication 1 ou 2, **caractérisé en ce que** la languette présente dans sa zone extérieure une section sensiblement en forme de clavette, le plan médian de la languette étant agencé parallèlement au plan médian de la rainure ou formant un angle aigu avec celui-ci dans l'état inséré.

7. Revêtement, habillage ou similaire selon la revendication 6, **caractérisé en ce que** l'assemblage à rainure et languette (2) présente au moins un élément d'étanchéité (12), l'élément d'étanchéité (12) étant de préférence un corps d'étanchéité inséré dans la rainure ou un corps d'étanchéité appliqué sur la languette.

8. Revêtement, habillage ou similaire selon la revendication 7, **caractérisé en ce qu'**un ou plusieurs ergots de retenue (14) sont disposés dans la rainure, lesquels retiennent l'élément d'étanchéité (12) dans la rainure, l'élément d'étanchéité (12) dépassant de préférence sur au moins un côté de la rainure du bord de celle-ci et l'élément d'étanchéité (12) habillant de préférence complètement le côté intérieur de la rainure.

9. Revêtement, habillage ou similaire selon la revendication 1 ou 2, **caractérisé en ce que** chaque élément de construction (1) présente côté extrémité au moins respectivement un corps d'insertion (17) avec des faces frontales de préférence profilées, lesquels corps sont fixés dans les zones de la face frontale latérale sur le côté opposé à la surface extérieure, par exemple par un assemblage collé, un assemblage soudé, un assemblage riveté, un assemblage par complémentarité de forme, un assemblage vissé, etc., de telle sorte qu'ils forment une terminaison de l'élément de construction (1) par rapport à un corps d'insertion (17) d'un élément de construction (1) contigu, sachant que de préférence à chaque fois deux corps d'insertion (17) d'éléments de construction contigus forment un assemblage par complémentarité de formes, de préférence un assemblage à rainure et languette (18), et les corps d'insertion (17) d'éléments de construction contigus étant fixés de préférence les uns aux autres au moyen d'un assemblage vissé, d'un assemblage collé, d'un assemblage riveté, d'un assemblage emboîté ou au moyen d'éléments de fixation ou de serrage (4).

10. Revêtement, habillage ou similaire selon la revendication 9, **caractérisé en ce qu'**au moins l'un des corps d'insertion (17) présente au moins un élément d'étanchéité (19).

11. Revêtement, habillage ou similaire selon la revendication 10, **caractérisé en ce que** les éléments d'étanchéité/l'élément d'étanchéité (19) est/sont dans un engagement par complémentarité de forme sur le corps d'insertion (17) d'un élément de construction, au moyen de pièces d'écartement d'étanchéité (20) ou au moyen d'un contact direct, avec les éléments d'étanchéité (12) des assemblages à rainure et languette (2) contigus du côté longitudinal du même élément de construction, ou avec les éléments d'étanchéité (12) des assemblages à rainure et languette (2) contigus du côté longitudinal de l'élément de construction contigu.

12. Revêtement, habillage ou similaire selon la revendication 1 ou 2, **caractérisé en ce que** deux éléments de construction contigus sont reliés l'un à l'autre sur leurs côtés avant au moyen d'une pièce d'écartement (22), par exemple à base de PVC.

13. Revêtement, habillage ou similaire selon l'une quelconque des revendications 2 à 12, **caractérisé en ce que** les éléments de construction (1) présentent chacun deux nervures longitudinales (3) pour la pose d'éléments de serrage et/ou de fixation (4) pour une fixation réciproque le long de l'assemblage à rainure et languette (2), une nervure longitudinale (3) étant disposée parallèlement à la languette et au-dessous de celle-ci et la seconde nervure longitudinale (3) disposée parallèlement à la rainure et entre la rainure et la nervure de retenue (5) pour la fixation de l'élément de construction (1) sur la construction inférieure (6), de telle sorte que chaque nervure longitudinale (3) est disposée au-dessous de la rainure de façon contiguë à une nervure longitudinale (3) sous le ressort de l'élément de construction contigu.

14. Revêtement, habillage ou similaire selon la revendication 13, **caractérisé en ce que** des nervures longitudinales (3), agencées le long de l'assemblage à rainure et languette (2), de deux éléments de construction contigus présentent des renflements de bord opposés les uns aux autres pour la fixation des éléments de serrage et/ou de fixation (4).

15. Revêtement, habillage ou similaire selon la revendication 14, **caractérisé en ce que** l'élément de serrage présente deux mâchoires de serrage pouvant être resserrées au moyen d'une broche filetée, qui sont en prise avec les renflements de bord des nervures longitudinales (3).
